(19) Europäisches Patentamt / European Patent Office / Office européen des brevets

(11) **EP 4 510 217 B1**

(12) **EUROPEAN PATENT SPECIFICATION**

(45) Date of publication and mention
of the grant of the patent:
**24.06.2026 Bulletin 2026/26**

(21) Application number: **24156238.8**

(22) Date of filing: **07.02.2024**

(51) International Patent Classification (IPC):
*H01M 4/133* (2010.01)       *H01M 4/134* (2010.01)
*H01M 4/136* (2010.01)       *H01M 4/36* (2006.01)
*H01M 4/58* (2010.01)        *H01M 4/587* (2010.01)
*H01M 4/66* (2006.01)        *H01M 10/0562* (2010.01)
*H01M 4/02* (2006.01)

(52) Cooperative Patent Classification (CPC):
**H01M 4/134; H01M 4/133; H01M 4/136;**
**H01M 4/364; H01M 4/5815; H01M 4/582;**
**H01M 4/587; H01M 4/661; H01M 4/667;**
**H01M 10/0562;** H01M 2004/021; H01M 2300/0068;
H01M 2300/008; H01M 2300/0091; Y02E 60/10

(54) **SOLID SECONDARY BATTERY AND METHOD OF PREPARING THE SAME**

FESTE SEKUNDÄRBATTERIE UND VERFAHREN ZUR HERSTELLUNG DAVON

BATTERIE SECONDAIRE SOLIDE ET SON PROCÉDÉ DE PRÉPARATION

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **17.08.2023   KR 20230107861**

(43) Date of publication of application:
**19.02.2025 Bulletin 2025/08**

(73) Proprietor: **Samsung SDI Co., Ltd.**
**Yongin-si, Gyeonggi-do 17084 (KR)**

(72) Inventors:
• **Lim, Hyungsub**
**17084 Yongin-si, Gyeonggi-do (KR)**
• **Jo, Sungnim**
**17084 Yongin-si, Gyeonggi-do (KR)**
• **Son, Inhyuk**
**17084 Yongin-si, Gyeonggi-do (KR)**
• **Shim, Kyueun**
**17084 Yongin-si, Gyeonggi-do (KR)**
• **Park, Taehyun**
**17084 Yongin-si, Gyeonggi-do (KR)**
• **Lee, Jieun**
**17084 Yongin-si, Gyeonggi-do (KR)**

(74) Representative: **Michalski Hüttermann & Partner**
**mbB**
**Kaistraße 16A**
**40221 Düsseldorf (DE)**

(56) References cited:
KR-B1- 102 210 401       US-A1- 2011 165 466
US-A1- 2019 067 684      US-B2- 10 090 528
US-B2- 11 411 246

**Description**

**BACKGROUND**

**1. Field**

According to one or more embodiments, the present disclosure relates to a solid secondary battery and a method of preparing the same.

**2. Description of the Related Art**

In line with recent requirements in industry, batteries with relatively high energy density and stability are actively being developed or prusued. For example, lithium batteries are utilized for one or more suitable purposes in information devices, communication devices, vehicles, and/or the like. Because vehicles are intimately intertwined and related to people's activities, e.g., on an everyday basis, safety is important.

Lithium batteries employing liquid electrolytes may be more susceptible to the risks of overheating or being flammable during an adverse event, e.g., due to a short circuit. Solid secondary batteries employing solid electrolytes in place of liquid electrolytes have been proposed. Compared with liquid electrolytes, solid electrolytes may be less susceptible to overheating or being flammable..

Therefore, by employing solid electrolytes instead of liquid electrolytes, a solid secondary battery may have an improved safety profile.

Solid lithium batteries are *inter alia* disclosed in US 2011/165466 A1, KR 102 210401 B1; US 11 411 246 B2, US 2019/067684 A1 and US 10 090 528 B2.

**SUMMARY**

One or more aspects are directed toward a solid secondary battery which has improved initial efficiency, energy density, and lifespan characteristics by including a cathode with an improved electronic conduction network.

One or more aspects include a method of preparing the solid secondary battery.

Additional aspects will be set forth in part in the description which follows and, in part, will be apparent from the description, or may be learned by practice of the presented embodiments of the present disclosure.

According to one or more embodiments, a solid secondary battery includes a cathode layer, an anode layer, and a solid electrolyte layer provided between the cathode layer and the anode layer, wherein the cathode layer includes a cathode current collector and a cathode active material layer provided on at least one side (e.g., on one or both (e.g., two or two opposite) sides (surfaces) of the cathode current collector, and the cathode active material layer includes a composite cathode active material, the composite cathode active material includes a composite of $M_2S$, an alkali metal salt, and a two dimensional carbonaceous structure, wherein M is an alkali metal, the alkali metal is Li or Na, the two-dimensional carbonaceous structure includes graphene, graphene oxide, reduced graphene oxide, or a combination thereof, and the composite includes a solid solution of $M_2S$ and the alkali metal salt.

According to one or more embodiments, a method of preparing a solid secondary battery includes milling a composition containing $M_2S$, an alkali metal salt, and a two-dimensional carbonaceous structure, adding a two-dimensional carbonaceous nanostructure thereto to obtain a composite, and milling the composite, preparing a cathode by utilizing a composition containing the composite that is mixed with a binder, preparing an anode, and providing an electrolyte between the cathode and the anode to thereby prepare the solid secondary battery.

In the milling the composite, a carbonaceous material may be further added to the composition.

**BRIEF DESCRIPTION OF THE DRAWINGS**

The previously described and other aspects, features, and advantages of certain embodiments of the present disclosure will be more apparent from the following description taken in conjunction with the accompanying drawings, in which:

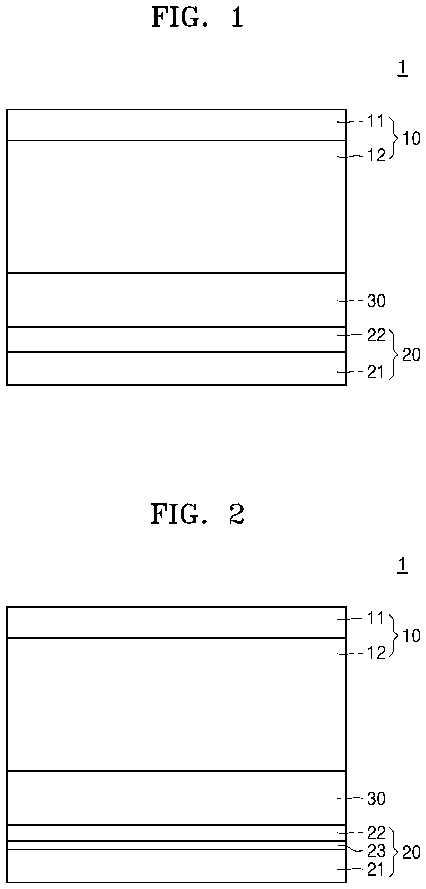

FIGS. 1-6 are each a cross-sectional view of a solid secondary battery according to one or more embodiments of the present disclosure.

**DETAILED DESCRIPTION**

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of one or more of the associated listed items. Expressions such as "at least one of," if (e.g., when) preceding a list of elements, modify the entire list of elements and do not modify the individual elements of the list.

The terminology utilized hereinbelow is utilized for the purpose of describing particular embodiments only and is not intended to limit the present disclosure. As utilized herein, the singular forms are intended to include the plural forms as well, unless the context clearly indicates otherwise. Unless otherwise defined, all terms (including chemical, technical and scientific terms) utilized herein have the same meaning as commonly understood by one of ordinary skill in the art to which the present disclosure belongs. It will be further understood that terms, such as those defined in commonly utilized dictionaries, should be interpreted as having a meaning that is consistent with their meaning in the context of the specification and the relevant art and should not be interpreted in an idealized sense or an overly formal sense unless expressly so defined herein.

Embodiments are described herein with reference to cross section illustrations that are schematic illustrations of idealized embodiments. As such, variations from the illustrated shapes as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, angles that are illustrated as being sharp may be rounded. Thus, the regions illustrated in the drawings are schematic in nature and their shapes are not intended to illustrate the precise shape of a region and are not intended to limit the scope of the present claims.

Throughout the specification, if (e.g., when) a component, such as a layer, a film, a region, or a plate, is described as being "above" or "on" another component, the component may be directly above another component, or there may be yet another component therebetween. It will be understood that although the terms "first," "second," and/or the like may be utilized herein to describe one or more suitable elements, these elements should not be limited by these terms. These terms are only utilized to distinguish one element from another element. The described terms are utilized only to distinguish one component from another. Components having substantially the same functional configuration in the present specification and drawings are denoted by the same reference numerals, and redundant descriptions thereof will not be provided.

The present disclosure may, however, be embodied in many different forms and should not be construed as limited to the example embodiments set forth herein. Rather, these example embodiments are provided so that this disclosure will be thorough and complete, and will fully convey the scope of the present disclosure s to those skilled in the art. In the drawings, like numbers refer to like elements throughout, and duplicative descriptions thereof may not be provided.

As used herein, expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

It will also be understood that if (e.g., when) an element is referred to as being "on" or "over" another element, it can be directly on the other element or intervening elements may also be present. In contrast, if (e.g., when) an element is referred to as being "directly on" or "directly over" another element, there are no intervening elements present.

It will be understood that, although the terms first, second, third, and/or the like may be utilized herein to describe one or more suitable elements, components, regions, layers, and/or sections, these elements, components, regions, layers, and/or sections should not be limited by these terms. These terms are only utilized to distinguish one element, component, region, layer, or section, from another element, component, region, layer, or section. For example, a first element, component, region, layer, or section could be termed a second element, component, region, layer, or section, without departing from the teachings of the present disclosure.

The terminology utilized herein is for the purpose of describing particular embodiments only and is not intended to be limiting of the present disclosure. As utilized herein, the singular forms "a", "an" and "the" are intended to include the plural forms as well including "at least one", unless the context clearly indicates otherwise. The term "at least one" should not be interpreted as being limited to a singular form. As utilized herein, the term "and/or" includes any and all combinations of one or more of the associated listed items. It will be further understood that the terms including," "includes," "include," "having," "has," "have," "comprises," "comprise," and/or "comprising" if (e.g., when) utilized in this specification, specify the presence of stated features, regions, integers, steps, operations, elements, and/or components, but do not preclude the presence or addition of one or more other features, regions, integers, steps, operations, elements, components, and/or groups thereof.

Furthermore, spatially relative terms, such as "lower", "bottom", or "" and "upper", "top", or "above" may be utilized herein to conveniently describe one element or feature's relationship to another element or feature. It will be understood that spatially relative terms are intended to encompass different orientations of the device while the device is in utilize or operated, in addition to the orientation depicted in the drawings. For example, if (e.g., when) the device in one of the drawings is turned over, elements described as being on the "lower" or "bottom" side of other elements would then be oriented on "upper" or "top" sides of the other elements. Therefore, example term "lower" can therefore, encompasses both (e.g., simultaneously) an orientation of "lower" and "upper". The device may be placed in other orientations (may be rotated by 90 degrees or in a different direction), and spatially relative terms utilized herein may be interpreted accordingly.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

**Definitions**

"Group" refers to a group in the Periodic Table of Elements of the Elements according to the 1-18 Group numbering system by the International Union of Pure and Applied Chemistry ("IUPAC").

The term "particle diameter" as utilized herein refers to an average particle diameter if (e.g., when) the particle is spherical, and refers to an average major axis length if (e.g., when) the particle is non-spherical. The particle diameter may be measured utilizing a particle size analyzer (PSA). The term "particle diameter" as utilized herein refers to, for example, an average particle diameter. The term "average particle diameter" as utilized herein refers to, for example, a median particle diameter (D50).

D50 may refer to a particle size corresponding to a cumulative 50 vol% as calculated from the side of particles with the smallest particle size in a particle size distribution as measured by a laser diffraction method.

D90 may refer to a particle size corresponding to a cumulative 90 vol% as calculated from the side of particles with the smallest particle size in a particle size distribution as measured by a laser diffraction method.

D10 may refer to a particle size corresponding to a cumulative 10 vol% as calculated from the side of particles with the smallest particle size in a particle size distribution as measured by a laser diffraction method.

As utilized herein, the term "metal" refers to both (e.g., simultaneously) metals and metalloids such as silicon and germanium, in an elemental or ionic state.

As utilized herein, the term "alloy" refers to a mixture of two or more metals.

As utilized herein, the term "electrode active material" refers to an electrode material capable of undergoing lithiation and delithiation.

As utilized herein, the term "cathode active material" refers to a cathode material capable of undergoing lithiation and delithiation.

As utilized herein, the term "anode active material" refers to an anode material capable of undergoing lithiation and delithiation.

As utilized herein, the terms "lithiation" and "to lithiate" refer to a process of adding lithium to an electrode active material.

As utilized herein, the terms "delithiation" and "to delithiate" refer to a process of removing lithium from an electrode active material.

As utilized herein, the terms "charging" and "to charge" refer to a process of providing electrochemical energy to a battery.

As utilized herein, the terms "discharging" and "to discharge" refer to a process of removing electrochemical energy from a battery.

As utilized herein, the terms "positive electrode" and "cathode" refer to an electrode at which electrochemical reduction and lithiation take place during a discharging process.

As utilized herein, the terms "negative electrode" and "anode" refer to an electrode at which electrochemical oxidation and delithiation take place during a discharging process.

The term "length" and "thickness" as utilized herein refers to, for example, an average length and an average thickness, respectively. The "length" and "thickness" measured utilizing software from a scanning electron microscope image.

The carbon nanostructure may be at least one selected from a one-dimensional (1D) carbon nanostructure and a two-dimensional (2D) carbon nanostructure. The term "1D carbon nanostructure" used herein refers to a carbon nanostructure having one dimension significantly larger than the other two dimensions, e.g., a carbon nanostructure in which the length in one dimension is significantly greater than the combined lengths of the other dimensions. For example, the 1D carbon nanostructure may be at least one selected from a carbon nanotube, a carbon nanowire, a carbon nanofiber, a carbon nanobelt, and a carbon nanorod, but is not limited thereto. The 1D carbon nanostructure may be any suitable 1D carbon nanostructure, including those available in the art. For example, the carbon nanotube may include a single-walled carbon nanotube (SWCNT) and/or a multi-walled carbon nanotube (MWCNT), but is not limited thereto. Any suitable carbon nanotube available in the art may be used as the 1D carbon nanostructure.

The term "2D carbon nanostructure" used herein refers to a carbon nanostructure with two dimensions significantly larger than the other one dimension, e.g., a carbon nanostructure in which the combined area defined by two dimensions is significantly larger than a thickness. For example, the 2D carbon nanostructure may be at least one selected from graphene oxide, reduced graphene oxide, a graphene nanoplate, and a carbon nanosheet, but is not limited thereto. The 2D carbon nanostructure may be any suitable 2D carbon nanostructure known in the art.

The term "inorganic electronically-conductive structure" refers to an inorganic structure with electronic conductivity but little ionic conductivity, and has a zero-dimensional, one-dimensional, two-dimensional, three-dimensional, or combination form, and its composition is as described in the detailed description. Here, the 0-dimensional shape has a particle shape, the 1-dimensional shape has a fiber shape, and the 2-dimensional shape has a plate-shaped shape.

The term "solid solution" is different from a mixture of two or more chemical species and represents a homogeneous crystalline phase containing two or more chemical species.

Also, the term "diameter" in the content of other suitable items, as used herein refers to an average (*e.g.*, fiber or nanofiber) diameter when the item (e.g., fiber) has a circular cross-section, and refers to an average major axis length when the item (*e.g.*, fiber) is non-circular in its cross-section.

Average lengths (e.g. average major axis length, average minor axis length) and average thicknesses may be measured by using the same methods as measuring the "particle diameter".

The "aspect ratio" used herein may refer to the average aspect ratio and may be determined from SEM images.

While specific examples are described herein, there may be alternatives, modifications, variations, improvements, and substantial equivalents of the examples disclosed herein, including those that are not presently unforeseen or unappreciated, may arise from applicants or those skilled in the art.

Hereinbelow, a composite cathode active material according to embodiments, a cathode including the same, and a solid secondary battery will be described in greater detail.

## Composite Cathode Active Material

A composite cathode active material according to one or more embodiments may include a composite of $M_2S$, an alkali metal salt, and a two-dimensional carbonaceous structure, wherein M is an alkali metal, and the alkali metal is Li or Na,

Unlike one-dimensional carbonaceous structures such as carbon nanofibers, the two-dimensional carbonaceous structures have a plate form and may include, for example, graphene, graphene oxide, or a combination thereof.

Compared with one-dimensional carbonaceous structures, the two-dimensional carbonaceous structures have a greater specific surface area and due to a house-of-cards effect, which helps maintain the network structure successfully by thoroughly being around (e.g., surrounding) lithium sulfides. Further, in the event of volume expansions of lithium sulfides during the process of charging and discharging, a contact surface with cathode components may be large, and connections well-maintained.

Increasing the amount of a two-dimensional carbonaceous structure, e.g., graphene, in the composite may increase its electronic conductivity, but may decrease ionic conductivity. Therefore, the domain size of a two-dimensional carbonaceous structure, e.g., graphene, may become important. If (e.g., when) graphene is utilized as the two-dimensional carbonaceous structure, the domain size of graphene may be controlled or selected utilizing the thickness, and/or the like of the graphene.

The amount of the two-dimensional carbon nanostructures may be about 1 part by weight to about 30 parts by weight, about 1 part by weight to about 25 parts by weight, about 1 part by weight to about 20 parts by weight, about 1 part by weight to about 18 parts by weight, or about 1 part by weight to about 15 parts by weight, with respect to 100 parts by weight of the composite. The two-dimensional carbon nanostructures may have a specific surface area of about 1 $m^2$/g to about 50 $m^2$/g, about 1 $m^2$/g to about 30 $m^2$/g, or about 5 $m^2$/g to about 20 $m^2$/g. Further, the two-dimensional carbon nanostructures may have a thickness of about 10 nm to about 10 $\mu$m, about 100 nm to about 8 $\mu$m, about 500 nm to about 6 $\mu$m, about 1 $\mu$m to 5 $\mu$m, or about 1 $\mu$m to 3 $\mu$m. In some embodiments, both (e.g., simultaneously) the thickness and the diameter may represent an average value. By utilizing the composite that uses two-dimensional carbon nanostructures having the specific surface area, diameter, thickness, and amount in the described ranges, it may be possible to prepare a solid secondary battery which exhibits improved lifespan characteristics by improving the electronic conductivity network inside the cathode. In some embodiments, strengthening the electronically conductive network may reduce the amount of conductive material in the cathode, and thus improve the energy density in the electrode. Furthermore, because the amount of lithium sulfide relatively increases as the amount of conductive materials in cathode decreases, initial efficiency of a solid secondary battery may improve.

The carbon nanostructure may be at least one selected from a one-dimensional (1D) carbon nanostructure and a two-dimensional (2D) carbon nanostructure. The term "1D carbon nanostructure" used herein refers to a carbon nanostructure having one dimension significantly larger than the other two dimensions, e.g., a carbon nanostructure in which the length in one dimension is significantly greater than the combined lengths of the other dimensions. For example, the 1D carbon nanostructure may be at least one selected from a carbon nanotube, a carbon nanowire, a carbon nanofiber, a carbon nanobelt, and a carbon nanorod, but is not limited thereto. The 1D carbon nanostructure may be any suitable 1D carbon nanostructure, including those available in the art. For example, the carbon nanotube may include a single-walled carbon nanotube (SWCNT) and/or a multi-walled carbon nanotube (MWCNT), but is not limited thereto. Any suitable carbon nanotube available in the art may be used as the 1D carbon nanostructure.

The term "2D carbon nanostructure" used herein refers to a carbon nanostructure with two dimensions significantly larger than the other one dimension, e.g., a carbon nanostructure in which the combined area defined by two dimensions is significantly larger than a thickness. For example, the 2D carbon nanostructure may be at least one selected from graphene oxide, reduced graphene oxide, a graphene nanoplate, and a carbon nanosheet, but is not limited thereto. The 2D carbon nanostructure may be any suitable 2D carbon nanostructure known in the art.

The term "inorganic electronically-conductive structure" refers to an inorganic structure with electronic conductivity but little ionic conductivity, and has a zero-dimensional, one-dimensional, two-dimensional, three-dimensional, or combination form, and its composition is as described in the detailed description. Here, the 0-dimensional shape has a particle shape, the 1-dimensional shape has a fiber shape, and the 2-dimensional shape has a plate-shaped shape.

Graphene is a polycyclic aromatic molecule formed by multiple carbon atoms connected by covalent bonds to each other, wherein the carbon atoms connected by such covalent bonds form a six-membered ring as a basic repeating unit, but may further include a five-membered ring and/or a seven-membered ring. As a result, the graphene is seen as a single layer of carbon atoms covalently bonded to each other (e.g., as an array of continuous $sp^2$ bonds). The graphene may include (e.g., consist of) a single layer, but may also include (e.g., consist of) multiple such layers stacked on top of each other to form multiple layers, for example, from about 1 layer to about 100 layers, or from about 2 layers to about 100 layers, or from about 3 layers to about 50 layers. In one or more embodiments, the graphene may have a thickness of about 10 nm to about 30 $\mu m$, about 100 nm to about 30 $\mu m$, or about 1 $\mu m$ to about 3 $\mu m$.

The two-dimensional carbonaceous structure may include a two-dimensional carbonaceous structure doped with a dopant, wherein the dopant may be an n-type or kind dopant or a p-type or kind dopant, and the dopant may include nitrogen (N), phosphorus (P), boron (B), sulfur (S), fluorine (F), chlorine (Cl), bromine (Br), germanium (Ge), gallium (Ga), or a combination thereof. Using such a doped two-dimensional carbonaceous structure may be able to control conductivity and side-reaction properties.

The dopant may include an n-type or kind dopant, a p-type or kind dopant, or a combination thereof. The n-type or kind dopant may be, for example, a dopant that has more electrons than carbon, and therefore introduces electrons into a carbonaceous material. The p-type or kind dopant may be a dopant that has fewer electrons than carbon, and therefore introduces holes into a two-dimensional carbonaceous structure. The carbonaceous structure may include, for example, a dopant-doped graphene. The doped graphene may include an n-type or kind dopant, a p-type or kind dopant, or a combination thereof. The dopant may include, for example, nitrogen (N), phosphorus (P), boron (B), sulfur (S), fluorine (F), chlorine (Cl), bromine (Br), germanium (Ge), gallium (Ga), or a combination thereof. For example, nitrogen (N) and phosphorus (P) are n-type or kind dopants. For example, gallium (Ga) is a p-type or kind dopant. The amount of a dopant in the doped carbonaceous structure may be, for example, 3 at% or less, or 1 at% or less. As the carbonaceous structure is doped with a dopant, the carbonaceous structure may have further increased conductivity.

M may be an alkali metal. The alkali metal may be Li or Na. $M_2S$ may be, for example, $Li_2S$ or $Na_2S$. The composite may include a solid solution of $M_2S$ and an alkali metal salt. Here, the term "solid solution" is different from a mixture of two or more chemical species and represents a homogeneous crystalline phase containing two or more chemical species.

As $M_2S$ forms a composite with an alkali metal salt and a carbonaceous material, both (e.g., simultaneously) the ionic conductivity and electronic conductivity of the $M_2S$ may concurrently (e.g., simultaneously) improve. Because the composite includes an alkali metal salt, the ionic conductivity of the composite cathode active material may improve and the internal resistance of the cathode and lithium battery including the composite cathode active material may be reduced. Because the composite includes a carbonaceous material, the electronic conductivity of the composite cathode active material may improve while the internal resistance of the cathode and lithium battery including the composite cathode active material may be reduced.

The composite includes $M_2S$ crystallites, and because the size of $M_2S$ crystallites is reduced to 11 nm or less, volume changes of the $M_2S$ crystallites during charging and discharging may be mitigated. For example, because the reduction of the size of $M_2S$ crystallites refers to that the volume change due to a single $M_2S$ crystallite is also decreased, the overall volume change of the composite during charging and discharging may be mitigated. For example, because grain boundaries between a plurality of $M_2S$ crystallites can more easily accommodate volume changes of $M_2S$ crystallites during charging and discharging as the size of $M_2S$ crystallites decreases, changes in the volume of the composite may be mitigated during charging and discharging. Further, the likelihood of defect, i.e., cracks, due to volume changes of the composite during charging and discharging may decrease. With the composite cathode active material including the described composite, a solid secondary battery including the composite cathode active material may have improved cycling performance. For example, a solid secondary battery including the composite cathode active material may have improved lifespan characteristics.

The composite includes $M_2S$ crystallites, and because the size of $M_2S$ crystallites is reduced to 11 nm or less, the contact surfaces between the $M_2S$ crystallites and the alkali metal salts and/or carbonaceous material may further increase. The increased contact surfaces between the $M_2S$ crystallites and the alkali metal salts and/or carbonaceous material may lead to a further increase in the ionic conductivity and/or electronic conductivity of the composite. If (e.g., when) a composite cathode active material includes such a composite, reversibility of electrode reactions may improve in a solid secondary battery including the composite cathode active material. This may result in an increase of the specific capacity of the composite cathode active material.

As the composite includes a solid solution of $M_2S$ and an alkali metal salt, the ionic conductivity of the composite may increase. For example, because the solid solution of $M_2S$ and alkali metal salt includes alkali metal ions provided within $M_2S$ crystallites, the solid solution of $M_2S$ and an alkali metal salt may have improved ionic conductivity compared to the ionic conductivity of $M_2S$. As a result, the ionic conductivity of the composite may improve, and the internal resistance of the composite may be reduced. With the composite cathode active material including the described composite, a solid secondary battery including the composite cathode active material may have improved cycling performance. For example, a solid secondary battery including the composite cathode active material may have improved high-rate capability.

The $Li_2S$-alkali metal salt-carbonaceous structure composite may be distinguished from a simple mixture of $Li_2S$, an alkali metal salt, and a carbonaceous structure. Because the simple mixture of $Li_2S$, an alkali metal salt, and a carbonaceous structure is unable to maintain dense interfaces between $Li_2S$, the alkali metal salt, and the carbonaceous structure, the simple mixture of $Li_2S$, an alkali metal salt, and a carbonaceous structure may provide high interfacial resistance and as a result may cause deterioration of the lifespan characteristics of the solid secondary battery.

The composite may include $M_2S$. Due to high theoretical capacity of $M_2S$, a secondary battery having high energy density may be provided. However, $M_2S$ has low ionic conductivity and/or electronic conductivity, and to address this shortcoming, $M_2S$ forms a composite with an alkali metal salt and a carbonaceous material. For example, the amount of $M_2S$ in the composite may be, about 10 wt% to about 80 wt%, about 20 wt% to about 70 wt%, about 30 wt% to about 60 wt%, or about 40 wt% to about 60 wt%, with respect to the total weight of the composite. If (e.g., when) the amount of $M_2S$ excessively increases, it may be difficult to improve the ionic conductivity and/or electronic conductivity of $M_2S$. If (e.g., when) the amount of $M_2S$ is too low, the energy density of the solid secondary battery may deteriorate.

The composite may include an alkali metal salt. The alkali metal salt may be, for example, a compound that does not contain sulfur (S). The alkali metal salt may be, for example, a binary compound or a ternary compound. For example, the alkali metal salt may be a binary compound composed of an alkali metal and one element selected from Groups 13 to 17 of the Periodic Table of the Elements. For example, the alkali metal salt may be a ternary compound composed of an alkali metal and two elements selected from Groups 13 to 17 of the Periodic Table of the Elements.

The alkali metal salt may be, for example, a lithium salt. Examples of the binary compounds of the lithium salt may include LiI, LiBr, LiCl, LiF, LiH, $Li_2O$, $Li_2Se$, $Li_2Te$, $Li_3N$, $Li_3P$, $Li_3As$, $Li_3Sb$, $Li_3Al_2$, $LiB_3$, or a combination thereof. Examples of the ternary compounds of the lithium salt may include $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, or a combination thereof. With the composite including the lithium salt, the composite may have further improved ionic conductivity. For example, the lithium salt may more easily form a solid solution with $Li_2S$ inside the composite.

The alkali metal salt may be, for example, a sodium salt. Examples of the binary compounds of sodium salt may include NaI, NaBr, NaCl, NaF, $Na_2O$, $Na_2Se$, $Na_3N$, $Na_3P$, $Na_3As$, $Na_3Sb$, $Na_3Al_2$, $NaB_3$, and/or a combination thereof. Examples of the ternary compounds of sodium salt may include $Na_3OCl$, $NaBF_4$, $NaPF_6$, $NaAsF_6$, $NaClO_4$, $NaNO_3$, $NaAlO_2$, $NaAlCl_4$, $NaNO_3$, $Na_2CO_3$, $NaBH_4$, $Na_2SO_4$, $Na_3BO_3$, $Na_3PO_4$, $Na_4NCl$, $Na_5NCl_2$, $Na_3BN_2$, and/or a combination thereof. With the composite including the sodium salt, the composite may have further improved ionic conductivity. For example, the sodium salt may more easily form a solid solution with $Na_2S$ inside the composite.

In the composite, the amount of the alkali metal salt may be about 1 wt% to about 40 wt%, about 5 wt% to about 35 wt%, about 10 wt% to about 35 wt%, about 15 wt% to about 35 wt%, about 20 wt% to about 35 wt%, or about 25 wt% to about 35 wt%, with respect to the total weight of the composite. If (e.g., when) the amount of the alkali metal salt excessively increases, the energy density of the secondary battery may deteriorate. If (e.g., when) the amount of the alkali metal salt is excessively low, the ionic conductivity of the composite decreases such that the internal resistance of the composite cathode active material may increase. As a result, the cycling performance of the lithium battery may deteriorate.

In the composite, the molar ratio of $M_2S$ to alkali metal salt may be, for example, about 50:50 to about 95:5, about 60:40 to about 95:5, about 60:40 to about 90:10, about 65:35 to about 90:10, about 65:35 to about 85:15, or about 70:30 to about 85:15. In the composite, the molar ratio of $M_2S$ to alkali metal salt may be, for example, about 50:50 to about 95:5, about 50:50 to about 90:10, about 50:50 to about 85:15, about 50:50 to about 80:20, about 50:50 to about 75:25, or about 50:50 to about 70:30. With the molar ratio of $M_2S$ to alkali metal salt being in the described ranges, the cycling performance of a solid secondary battery including the composite cathode active material may further improve. If (e.g., when) the molar fraction of $M_2S$ is excessively high, the effect of the alkali metal salt on improving ionic conductivity may be negligible. If (e.g., when) the molar fraction of $M_2S$ is excessively low, the energy density of the solid secondary battery including the composite cathode active material may deteriorate.

In the composite, the molar ratio of $Li_2S$ to lithium salt may be, for example, about 50:50 to about 95:5, about 60:40 to about 95:5, about 60:40 to about 90:10, about 65:35 to about 90:10, about 65:35 to about 85:15, or about 70:30 to about 85:15. In the composite, the molar ratio of $Li_2S$ to lithium salt may be, for example, about 50:50 to about 95:5, about 50:50 to about 90:10, about 50:50 to about 85:15, about 50:50 to about 80:20, about 50:50 to about 75:25, or about 50:50 to about 70:30. With the molar ratio of $Li_2S$ to lithium salt being in the described ranges, the cycling performance of a solid secondary battery including the composite cathode active material may further improve. If (e.g., when) the molar fraction of $Li_2S$ is excessively high, the effect of the lithium salt on improving ionic conductivity may be negligible. If (e.g., when) the molar fraction of $Li_2S$ is excessively low, the energy density of a solid secondary battery including the composite cathode active material may deteriorate.

For example, the amount of the carbonaceous structures included in the composite may be about 1 wt% to about 20 wt%, about 5 wt% to about 20 wt%, or about 10 wt% to about 20 wt%, with respect to the total weight of the composite. If (e.g., when) the amount of the carbonaceous structures excessively increases, the energy density of the solid secondary battery may deteriorate. If (e.g., when) the amount of the carbonaceous structures excessively decreases, the electronic conductivity of the composite decreases, such that the internal resistance of the composite cathode active material may increase. As a result, the cycling performance of the lithium battery may deteriorate.

For example, a first lattice constant d1 derived from a first peak appearing at a diffraction angle $2\theta = 27° \pm 2.0°$, corresponding to the (111) plane of $M_2S$, on the XRD spectrum of the composite, may be larger than a second lattice constant d2 derived from a second peak appearing at a diffraction angle $2\theta = 27° \pm 2.0°$, corresponding to the (111) plane of $M_2S$ on the XRD spectrum of the $M_2S$ utilized in the preparation of the aforementioned composite. Because the $M_2S$-alkali metal salt-carbonaceous structure composite has a larger lattice constant (d) than the $M_2S$ utilized for the preparation of the composite, alkali metal ions inside the $M_2S$ crystal structures of the composite may be more easily transported. The composite cathode active material including the composite may have further improved ionic conductivity. A secondary battery including the composite cathode active material may have reduced internal resistance and improved cycling performance. The difference between a first lattice constant d1 and a second lattice constant d2 may be 0.05 Å or more, 0.1 Å or more, 0.15 Å or more, 0.2 Å or more, or 0.25 Å or more. For example, the size of the first lattice constant d1 may be 5.78 Å or more, 5.80 Å or more, 5.82 Å or more, 5.85 Å or more, 5.90 Å or more, 5.95 Å or more, or 6.0 Å or more. With the composite having a first lattice constant d1 in the described ranges, the composite cathode active material including the composite may have further improved ionic conductivity. A secondary battery including the composite cathode active material may have reduced internal resistance and improved cycling performance.

For example, if (e.g., when) on an XRD spectrum of the composite, a first peak appearing at a diffraction angle of $2\theta = 18° \pm 2.0°$ corresponding to the (111) plane of $M_2S$ may have a first diffraction angle, and on an XRD spectrum of the $M_2S$ utilized for the preparation of the aforementioned composite, a second peak appearing at a diffraction angle $2\theta = 18° \pm 2.0°$, corresponding to the (111) plane of $M_2S$ may have a second diffraction angle, the first diffraction angle may be smaller than the second diffraction angle. For example, the position of the first peak may have shifted to a lower angle than the position of the second peak. In some embodiments, the $M_2S$-alkali metal salt-carbonaceous material composite may have a reduced crystallite size than the $M_2S$ utilized in the preparation of the composite. Because the $M_2S$-alkali metal salt-carbonaceous material composite has a reduced crystallite size, volume changes of the crystallite during charging and discharging are reduced, and thus, the composite including a plurality of the crystallite may exhibit reduced volume changes during charging and discharging. Defects such as crack formation during charging and discharging of the composite cathode active material including the composite may be suppressed or reduced. As a result, a solid secondary battery including the composite cathode active material may have improved cycling performance.

An intensity derived from a first peak appearing at a diffraction angle of $2\theta = 18° \pm 2.0°$ on the XRD spectrum of the composite cathode active material may be smaller than an intensity derived from a second peak appearing at a diffraction angle of $2\theta = 18° \pm 2.0°$ on the XRD spectrum of the two-dimensional carbonaceous structure utilized to prepare the composite, wherein the first peak may have a first full width at half maximum (FWHM1) and the second peak may have a second full width at half maximum (FWHM2), the FWHM1 may be greater than the FWHM2, and the FWHM1 may be 1° or more, 1.05° or more, 1.10° or more, or 1.15° or more. The first and second peaks appearing at a diffraction angle of $2\theta = 18° \pm 2.0°$ are peaks corresponding to the (002) plane of carbons in graphene.

For example, on the XRD spectrum of the composite, a third peak appearing at a diffraction angle of $2\theta = 27° \pm 2.0°$, corresponding to the (111) plane of $M_2S$, may have a third full width at half maximum FWHM3, and on the XRD

spectrum of the $M_2S$ utilized for the preparation of the aforementioned composite, a fourth peak appearing at a diffraction angle of $2\theta = 27° \pm 2.0°$, corresponding to the (111) plane of $M_2S$, may have a fourth full width at half maximum FWHM4, wherein FWHM3 may be greater than FWHM4. In some embodiments, the $M_2S$-alkali metal salt-carbonaceous material composite may have an increased lattice strain than the $M_2S$ utilized in the preparation of the composite. For example, as the $M_2S$ and the alkali metal salt form a solid solution, the $M_2S$-alkali metal salt-two-dimensional carbonaceous structure composite may have an increased lattice strain. Because the $M_2S$-alkali metal salt- two-dimensional carbonaceous structure composite has an increased FWHM than the $M_2S$ utilized in the composite preparation, a composite cathode active material including the composite may have further improved ionic conductivity. A solid secondary battery including the composite cathode active material may have reduced internal resistance and improved cycling performance.

A third full width at half maximum may be, for example, 1° or more, 1.05° or more, 1.10° or more, or 1.15° or more. If e.g., when) the composite has the first full width at half maximum FWHM1 to the fourth full width at half maximum FWHM4 in the described ranges, the composite cathode active material including the composite may have further improved ionic conductivity. A solid secondary battery including the composite cathode active material may have reduced internal resistance and improved cycling performance.

The particle size of the composite cathode active material, for example, the size of composite particles, may be, for example, 10 $\mu$m or less, 8 $\mu$m or less, 5 $\mu$m or less, 2 $\mu$m or less, 1.5 $\mu$m or less, or 1 $\mu$m or less. The particle size of the composite may be, for example, in a range of about 1 $\mu$m to about 10 $\mu$m, in a range of about 2 $\mu$m to about 8 $\mu$m, or in a range of about 3 $\mu$m to about 8 $\mu$m, The size of the composite particles may be, for example, in a range of about 0.1 $\mu$m to about 10 $\mu$m, about 0.1 $\mu$m to about 8 $\mu$m, about 0.1 $\mu$m to about 5 $\mu$m, about 0.1 $\mu$m to about 2 $\mu$m, about 0.1 $\mu$m to about 1.5 $\mu$m, or about 0.1 $\mu$m to about 1 $\mu$m. With the composite particles having a size in the described ranges, volume changes during charging and discharging are suppressed or reduced, and thus, degradation of a composite cathode active material including the composite during charging and discharging may be suppressed or reduced. If (e.g., when) the size of the composite particles excessively increases, volume changes of the composite during charging and discharging increase, and thus, degradation of a composite cathode active material including the composite may be accelerated. As a result, a secondary battery including the composite cathode active material may have improved cycling performance.

In some embodiments, a solid secondary battery including the composite cathode active material may have improved cycling performance, for example, improved lifespan characteristics. For example, a size of composite particles, e.g., a particle diameter of the composite may be measured utilizing a laser diffraction method, a scanning electron microscope, and/or the like. For example, the particle diameter of the composite may be an arithmetic refer to value of particle diameters of a plurality of particles measured utilizing software from a scanning electron microscope image.

The particle size (diameter) of $M_2S$ in the composite cathode active material (in the form of particles), for example, the size of composite particles (of the active material), may be, for example, 2 $\mu$m or less, 1.5 $\mu$m or less, or 1 $\mu$m or less. The particle size of the $M_2S$ may be, for example, in a range of about 0.1 $\mu$m to about 2 $\mu$m, in a range of about 0.1 $\mu$m to about 1.5 $\mu$m, or in a range of about 0.1 $\mu$m to about 1 $\mu$m.

The $M_2S$ particles may have a size in such ranges, and thus a change in volume during charging/discharging may be suppressed or reduced, thereby suppressing the deterioration of the composite cathode active material including the composite during charging/discharging.

If (e.g., when) the size of the $M_2S$ particles excessively increases, a change in volume of the composite during charging/discharging may increase, which may accelerate the deterioration of the composite cathode active material including the composite.

Because the composite further contains an alkali metal salt having ionic conductivity (e.g., being an ion conductor) and a carbonaceous structure having electronic conductivity (e.g., being an electron conductor) in addition to lithium sulfide ions, conduction of electrons (electronic conduction) from the surface of the composite to the inside of the composite may be facilitated. The internal resistance of the composite cathode active material including the composite may decrease, and the cycling performance of a solid secondary battery including the composite cathode active material may further improve.thic

The diameter and length of the carbon nanostructure may be measured from a scanning electron microscope (SEM) image or an optical microscope image. In other embodiments, the diameter and/or length of the carbon nanostructure may be measured by a laser diffraction method. For example, the carbon nanostructure may be dispersed in a solvent, and/or the like to prepare dispersion of the carbon nanotube structures. The dispersion may be utilized for the preparation of the composite.

For example, with respect to 100 parts by weight of the composite, about 30 parts by weight to about 80 parts by weight of $M_2S$, about 1 part by weight to about 40 parts by weight of the alkali metal salt, and about 1 part by weight to about 30 parts by weight of the two-dimensional carbonaceous structure may be included. For example, the amount of $M_2S$ included in the composite may be about 30 parts by weight to about 80 parts by weight, about 30 parts by weight to about 70 parts by weight, about 30 parts by weight to about 60 parts by weight, or about 40 parts by weight to about 60 parts by weight, with respect to 100 parts by weight of the composite. For example, the amount of the alkali metal salt included in the composite may be about 10 parts by weight to about 40 parts by weight, about 15 parts by weight to about 40 parts by weight, about 20 parts by weight to about 40 parts by weight, or about 25 parts by weight to about 35 parts by weight, with respect to 100 parts by weight of the composite. The amount of the two-dimensional carbonaceous structure included in the composite may be about 1 part by weight to about 30 parts by weight, about 1 part by weight to about 25 parts by weight, about 5 parts by weight to about 25 parts by weight, about 5 parts by weight to about 20 parts by weight, or about 5 parts by weight to about 18 parts by weight with respect to 100 parts by weight of the composite. With the composite having the $M_2S$, the alkali metal salt, and the carbonaceous material composition in the described ranges, a composite cathode active material including the composite may be provided with excellent or suitable ionic conductivity and/or electronic conductivity.

For example, the composite may have an ionic conductivity at 25 °C of $1\times10^{-5}$ S/cm or more, $2\times10^{-5}$ S/cm or more, $4\times10^{-5}$ S/cm or more, $6\times10^{-5}$ S/cm or more, $8\times10^{-5}$ S/cm or more, or $1\times10^{-4}$ S/cm or more. Ionic conductivity may be measured, for example, utilizing electrochemical impedance spectroscopy, a DC polarization method, and/or the like. With the composite having an ionic conductivity in the described ranges, the composite cathode active material containing the composite may have reduced internal resistance. A secondary battery including the composite cathode active material may have improved cycling performance. For example, the composite may have an electronic conductivity at 25 °C of $1\times10^{-5}$ S/cm or more, $2\times10^{-5}$ S/cm or more, $4\times10^{-5}$ S/cm or more, $6\times10^{-5}$ S/cm or more, $8\times10^{-5}$ S/cm or more, or $1\times10^{-4}$ S/cm or more. Electronic conductivity may be measured, for example, utilizing electrochemical impedance spectroscopy, a direct current (DC) polarization method, and/or the like. With the composite having an electronic conductivity in the described ranges, the composite cathode active material containing the composite may have reduced internal resistance. A solid secondary battery including the composite cathode active material may have improved initial efficiency, electrode energy density, and lifespan characteristics.

**Cathode layer**

**Cathode layer: Cathode Active Material**

A cathode layer according to embodiments may include a cathode current collector and a cathode active material layer provided on one side or both (e.g., opposite) sides of the cathode current collector. The cathode active material layer may include the composite cathode active material and may further include a solid electrolyte. Because the cathode includes the composite cathode active material and the solid electrolyte, internal resistance may be further reduced. Thus, the cycling performance of a secondary battery provided with the cathode may further improve.

Referring to FIGS. 1 to 6, a cathode layer 10 may include a cathode current collector 11; and a cathode active material layer 12 provided on one side or both (e.g., opposite) sides of the cathode current collector 11. The cathode active material layer 12 may include the composite cathode active material and the solid electrolyte.

The cathode active material layer 12 may include about 40 parts by weight to about 90 parts by weight, about 40 parts by weight to about 80 parts by weight, about 50 parts by weight to about 80 parts by weight, or about 50 parts by weight to about 70 parts by weight of the composite cathode active material, with respect to 100 parts by weight of the cathode active material layer 12. If (e.g., when) the amount of the composite cathode active material excessively decreases, the energy density of the secondary battery may deteriorate. If (e.g., when) the amount of the composite cathode active material excessively increases, degradation of the cathode by volume changes of the cathode during charging and discharging may be accelerated. As a result, the cycling performance of the secondary battery 1 may deteriorate.

The cathode active material layer 12 may further include other suitable cathode active materials, in addition to the composite cathode active materials described herein.

The other cathode active materials may include, for example, a $Li_2S$-containing composite. Examples of the $Li_2S$ composites may include a composite of $Li_2S$ and a carbonaceous material, a composite of $Li_2S$, a carbonaceous material, and a solid electrolyte, a composite of $Li_2S$ and a solid electrolyte, a composite of $Li_2S$ and a lithium salt, a composite of $Li_2S$ and a metal carbide, a composite of $Li_2S$, a carbonaceous material, and a metal carbide, a composite of $Li_2S$ and a metal nitride, a composite of $Li_2S$, a carbonaceous material, and a metal nitride, or a combination thereof.

The composite of $Li_2S$ and a carbonaceous material may include a carbonaceous material. For more details of the carbonaceous material, refer to the carbonaceous material of the composite cathode active material described herein. The method of preparing the composite of $Li_2S$ and a carbonaceous material may be a dry method, a wet method, or a combination thereof; however, the method is not limited thereto and may be any method available in the art. For example, the method of preparing the composite of $Li_2S$ and a carbonaceous material may be milling, heat treatment, deposition, and/or the like; but the method is not necessarily limited thereto and may be any method available in the art.

The composite of $Li_2S$, a carbonaceous material, and a solid electrolyte may include a carbonaceous material and a solid electrolyte. For more details of the carbonaceous material, refer to the composite of $Li_2S$ and a carbonaceous material described herein. The solid electrolyte may be, for example, any material available as an ionically conductive material in the art. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may contain, for example, Li, S, and P, and may optionally further contain a halogen element. The sulfide-based solid electrolyte may be selected from the sulfide-based solid electrolytes utilized in the electrolyte layer. The sulfide-based solid electrolyte may have an ionic conductivity of $1 \times 10^{-5}$ S/cm or more at room temperature, for example. The oxide-based solid electrolyte may contain, for example, Li, O, and a transition metal element, and may optionally further contain other elements. For example, the oxide-based solid electrolyte may be a solid electrolyte having an ionic conductivity of $1 \times 10^{-5}$ S/cm or more at room temperature. The oxide-based solid electrolyte may be selected from the oxide-based solid electrolytes utilized in the electrolyte layer.

The composite of $Li_2S$ and solid electrolyte may include a solid electrolyte. For more details of the solid electrolyte, refer to the composite of $Li_2S$, carbonaceous material, and solid electrolyte described herein.

The composite of $Li_2S$ and lithium salt may include $Li_2S$ and a lithium salt. For more details of the lithium salt, refer to the lithium salt of the composite cathode active material described herein. In some embodiments, the lithium salt may be at least one lithium halide compound selected from among LiF, LiCl, LiBr, and LiI. For example, the composite of $Li_2S$ and a lithium salt may be a composite of $Li_2S$ and a lithium halide. Because the composite of $Li_2S$ and a lithium halide includes a lithium halide compound, further improved ionic conductivity may be provided. The composite of $Li_2S$ and a lithium salt may be distinguished from a simple mixture of $Li_2S$ and a lithium salt. Because the simple mixture of $Li_2S$ and a lithium salt fails to maintain dense interfaces between $Li_2S$ and the lithium salt, the simple mixture of $Li_2S$ and a lithium salt may provide high interfacial resistance and cause deterioration of the lifespan characteristics of the solid secondary battery.

The composite of $Li_2S$ and metal carbide may include a metal carbide. The metal carbide may be, for example, a two-dimensional metal carbide. The two-dimensional metal carbide may be represented by, for example, $M_{n+1}C_nT_x$ (M is a transition metal, T is a terminal group, T is O, OH and/or F, n = 1, 2, or 3, and x is the number of terminal groups). The two-dimensional metal carbide may be, for example, $Ti2CT_x$, $(Ti_{0.5}, Nb_{0.5})_2CT_x$, $Nb_2CT_x$, $V_2CT_x$, $Ti_3C_2T_x$, $(V_{0.5}, Cr_{0.5})_3C_2T_x$, $Ti_3CNT_x$, $Ta_4C_3T_x$, $Nb_4C_3T_x$, or a combination thereof. The surface of the two-dimensional metal carbide may be terminated by O, OH, and/or F.

The composite of $Li_2S$, carbonaceous material, and metal carbide may include a carbonaceous material and a metal carbide. For more details of the carbonaceous material, refer to the composite of $Li_2S$ and a carbonaceous material described herein. For more details of the metal carbide, refer to the composite of $Li_2S$ and metal carbide described herein.

The composite of $Li_2S$ and metal nitride may include a metal nitride. The metal nitride may be, for example, a two-dimensional metal nitride. The two-dimensional metal nitride may be represented by, for example, $M_{n+1}N_nT_x$ (M is a transition metal, T is a terminal group, T is O, OH and/or F, n = 1, 2, or 3, and x is the number of terminal groups). The surface of the two-dimensional metal nitride may be terminated by O, OH, and/or F.

The composite of $Li_2S$, carbonaceous material, and metal nitride may include a carbonaceous material and a metal nitride. For more details of the carbonaceous material, refer to the composite of $Li_2S$ and a carbonaceous material, described herein. For more details of the metal carbide, refer to the composite of $Li_2S$ and metal nitride described herein.

The cathode active material layer 12 may further include, for example, a sulfide-based compound distinguished from the cathode active materials described herein. The sulfide-based compound may be, for example, a compound including sulfur and a metal element other than Li. The sulfide-based compound may be, for example, a compound including sulfur and a metal element with an atomic weight of 10 or more, that belongs to Groups 1 to 14 in the Periodic Table of the Elements (e.g., that is selected from among elements in Groups 1 to 14 of the Periodic Table). Examples of the sulfide-based compound may be or include, for example, $FeS_2$, $VS_2$, NaS, MnS, FeS, NiS, CuS, and/or a combination thereof. As the cathode active material layer further includes a sulfide-based compound, cycling performance of a solid secondary battery may further improve. The amount of such a sulfide-based compound included in the cathode active material layer 12 may be 10 wt% or less, 5 wt% or less, 3 wt% or less, or 1 wt% or less, with respect to the total weight of the cathode active material layer 12.

**Cathode: Solid Electrolyte**

The cathode active material layer 12 may further include, for example, a solid electrolyte. The solid electrolyte may be a sulfide-based solid electrolyte, for example. The solid electrolyte included in the cathode 10 may be identical to or different from a solid electrolyte included in the electrolyte layer 30. For more details of the solid electrolyte, refer to the description of the electrolyte layer 30.

The solid electrolyte included in the cathode active material layer 12 may be in the form of particles and have a smaller median particle diameter D50 than that of the solid electrolyte included in the electrolyte layer 30. For example, the median particle diameter D50 of the solid electrolyte included in the cathode active material layer 12 may be 90 % or less, 80 % or less, 70 % or less, 60 % or less, 50 % or less, 40 % or less, 30 % or less, or 20 % or less, relative to the median particle diameter D50 of the solid electrolyte included in the electrolyte layer 30. D50 average particle diameter may be, for example, a median particle diameter (D50). Median particle diameter (D50) may refer to a particle size corresponding to a cumulative volume of 50 vol% as counted from the smallest particle size in a particle size distribution measured by a laser diffraction method.

With respect to 100 parts by weight of the cathode active material layer 12, the solid electrolyte may be included in an amount of about 10 parts by weight to about 60 parts by weight, about 10 parts by weight to about 50 parts by weight, about 20 parts by weight to about 50 parts by weight, or about 30 parts by weight to about 50 parts by weight. If (e.g., when) the amount of the solid electrolyte excessively decreases, the internal resistance of the cathode increases, causing the cycling performance of the secondary battery to deteriorate. If (e.g., when) the amount of the sulfide-based solid electrolyte excessively increases, the energy density of the secondary battery 1 may decrease.

**Cathode: Conductive Material**

The cathode active material layer 12 may further include a conductive material. The conductive material may be, for example, a carbonaceous conductive material, a metal-based conductive material, or a combination thereof. Examples of the carbonaceous conductive material may include graphite, carbon black, acetylene black, Ketjen black, carbon fibers, and/or a combination thereof. However, the carbonaceous conductive material is not limited to the aforementioned examples and may be any material available as a carbonaceous conductive material in the art. The metal-based conductive material may be metal powder, metal fibers, or a combination thereof, but without being limited thereto may any metal-based conductive material available in the art. For example, the amount of the conductive material included in the cathode active material layer 12 may be about 1 wt% to about 30 wt%, about 1 wt% to about 20 wt%, about 1 wt% to about 10 wt%, with respect to the total weight of the cathode active material layer 12.

The cathode active material layer may include a carbonaceous material and the carbonaceous material may be provided only in the composite cathode active material. The cathode active material layer 12 may not contain any additional carbonaceous materials, other than the composite cathode active material provided with the carbonaceous material. Because the cathode active material layer does not contain any additional carbonaceous materials, the cathode and the secondary battery 1 may have improved energy density, and the manufacturing process thereof may be simplified. In present disclosure, "not including a or any 'component'" "excluding a or any 'component'", "'component'-free", and/or the like refers to that the "component" not being added, selected or utilized as a component in the composition, but the "component" of less than a suitable amount may still be included due to other impurities and/or external factors.

**Cathode: Binder**

The cathode active material layer 12 may further include a binder. The binder may be, for example, styrene butadiene rubber (SBR), polytetrafluoroethylene, polyvinylidene fluoride, polyethylene, and/or the like, but without being limited to the aforementioned examples, may utilize any material utilized as a binder in the art. The amount of the binder included in the cathode active material layer 12 may be, for example, about 1 wt% to about 10 wt% with respect to the total weight of the cathode active material layer 12. The binder may not be provided.

**Cathode: Other Additives**

The cathode active material layer 12 may further include, for example, an additive such as a filler, a coating agent, a dispersing agent, and an ionically conductive aid, in addition to the cathode active material, the solid electrolyte, the binder, and the conductive material described herein.

For the filler, coating agent, dispersing agent, and ion-conducting aid that may be included in the cathode active material layer 12, any suitable material generally utilized in an electrode of a solid secondary battery may be utilized.

**Cathode: Cathode Current Collector**

For example, the cathode current collector 11 may utilize a plate, a foil, and/or the like, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may not be provided. The cathode current collector 11 may have a thickness of, for example, about 1 $\mu$m to about 100 $\mu$m, about 1 $\mu$m to about 50 $\mu$m, about 5 $\mu$m to about 25 $\mu$m, or about 10 $\mu$m to about 20 $\mu$m.

For example, the cathode current collector 11 may include a base film, and a metal layer provided on one side or both (e.g., simultaneously) sides of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. For example, the base film may be an insulator. As the base film includes an insulating thermoplastic polymer, in the event of a short circuit, the base film is softened or liquefied, blocking the operation of the battery, to thereby prevent or reduce a rapid increase in electrical current. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. In the event of an overcurrent, the metal layer may be disconnected, thus acting as an electrochemical fuse to provide protection against short circuits. A limiting current and a maximum current may be controlled or selected through controlling a thickness of the metal layer. The metal layer may be plated or deposited on the base film. As the thickness of the metal layer decreases, the limiting current and/or maximum current of the cathode current collector 11 decrease, and therefore, the stability of the lithium battery during a short circuit may improve. A lead-tab may be added on the metal layer for connection to the outside. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. For stronger welding between the metal layer and the lead-tab, a metal chip may be added between the metal layer and the lead-tab. The metal chip may be a flake of the same material as the metal of the metal layer. For example, the metal chip may be a metal foil, a metal mesh, and/or the like. For example, the metal chip may be an aluminum foil, a copper foil, an SUS foil, and/or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal layer. For example, the base film may have a thickness of about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. With the base film having a thickness within the described ranges, the weight of the electrode assembly may be more effectively reduced. For example, the base film may have a melting point of about 100 °C to about 300 °C, about 100 °C to about 250 °C or less, or about 100 °C to about 200 °C. Because the base film has a melting point within the described ranges, the base film may easily melt and be bonded to the lead-tab while welding the lead-tab. To improve adhesion between the base film and the metal layer, a surface treatment such as corona treatment may be performed on the base film. For example, the metal layer may have a thickness of about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. With the metal layer having a thickness within the described ranges, the electrode assembly may provide stability while maintaining conductivity. For example, the metal chip may have a thickness of about 2 $\mu$m to about 10 $\mu$m, about 2 $\mu$m to about 7 $\mu$m, or about 4 $\mu$m to about 6 $\mu$m. With the metal chip having a thickness within the described ranges, the metal layer and the lead-tab may be more easily connected. Because the cathode current collector 11 has the described structure, the weight of the cathode may be reduced, and as a result, energy density of the cathode and the lithium battery may improve.

**Cathode layer: Inactive Member**

Referring to FIGS. 1 to 6, a cathode layer 10 may include a cathode current collector 11 and a cathode active material layer 12 provided on one side of the cathode current collector 11. On one side surface of the cathode 10, an inactive member 40 may be provided. Referring to FIG. 5, the inactive member 40 may be provided on one side surface of the cathode current collector 11 and the cathode active material layer 12. Referring to FIG. 6, the inactive member 40 may be provided on one side surface of the cathode active material layer 12 and provided between the electrolyte layer 30 and the cathode current collector 11 opposing or facing the electrolyte layer 30. The inactive member 40 may not be provided on one side surface of the cathode current collector 11. For example, the electrolyte layer 30 may be a solid electrolyte layer.

By including the inactive member 40, cracking of the solid electrolyte layer 30 is prevented or reduced if (e.g., when) manufacturing and/or during charging and discharging the solid secondary battery 1 and as a result, the cycling performance of the solid secondary battery 1 may improve. In the solid secondary battery 1 that does not include the inactive member 40, due to a non-substantially uniform pressure applied to the electrolyte layer 30 that is in contact with the cathode 10 during manufacturing and/or charging and discharging of the solid secondary battery 1, cracks may form in the electrolyte layer 30, and due to growth of lithium metal caused thereby, the likelihood of a short circuit occurring may increase.

In the solid secondary battery 1, the thickness of the inactive member 40 may be greater than the thickness of the cathode active material layer 12, or equal to the thickness of the cathode active material layer 12. In other embodiments, in the solid secondary battery 1, the thickness of the inactive member 40 may be substantially the same as the thickness of the cathode 10. Because the thickness of the inactive member 40 is equal to the thickness of the cathode 10, a substantially uniform pressure is applied between the cathode 10 and the electrolyte layer 30, and as the cathode 10 and the electrolyte layer 30 are sufficiently flush against each other, interfacial resistance between the cathode 10 and the electrolyte layer 30 may decrease. Further, as the electrolyte layer 30 is sufficiently sintered during the press manufacturing process of the solid secondary battery 1, the electrolyte layer 30 and the solid secondary battery 1 including the same may have decreased internal resistance.

The inactive member 40 may be in contact with the electrolyte layer 30 while being around (e.g., surrounding) a side surface of the cathode 10. As the inactive member 40 is in contact with the electrolyte layer 30 while being around (e.g.,

surrounding) a side surface of the cathode 10, in the electrolyte layer 30 that is not in contact with the cathode layer 10, cracking of the electrolyte layer 30 caused by a pressure difference during the press process may be effectively prevented or reduced. The inactive member 40, while being around (e.g., surrounding) a side surface of the cathode layer 10, may be separated from the anode layer 20, more specifically, from an anode active material layer 22. The inactive member 40 may be in contact with the electrolyte layer 30 while being around (e.g., surrounding) a side surface of the cathode 10, and may be apart from the anode layer 20. The risk of short circuits due to the cathode 10 and the first anode active material layer 22 coming into physical contact with each other, or overcharging of lithium, and/or the like may be then reduced. For example, because the inactive member 40 is concurrently (e.g., simultaneously) provided on one side surface of the cathode active material layer and one side surface of the cathode current collector 11, the risk of short circuiting due to the cathode current collector 11 and the anode 20 coming into contact may be effectively inhibited.

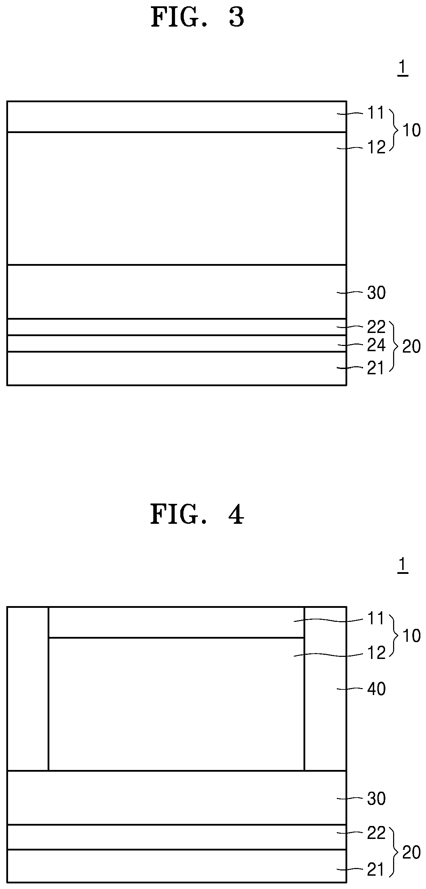

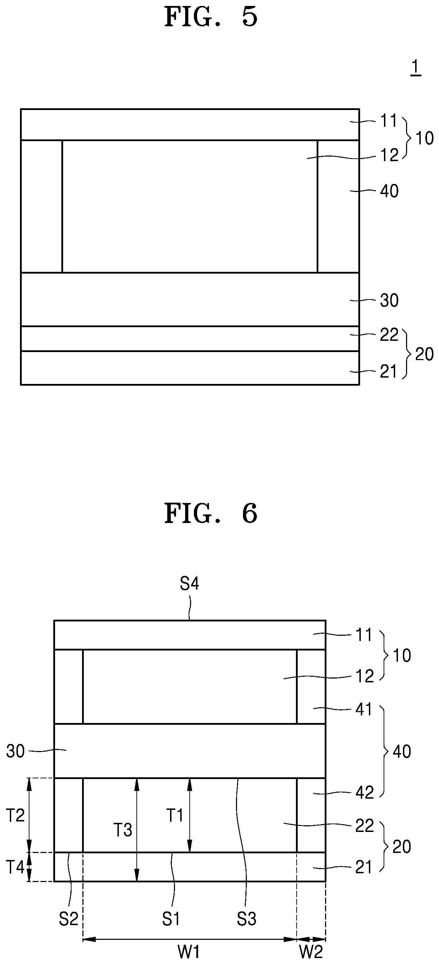

Referring to FIGS. 4 and 5, the inactive member 40 may extend from one side surface of a cathode layer 10 to an end portion of the electrolyte layer 30. As the inactive member 40 extends to the end portion of the electrolyte layer 30, formation of cracks at the end portion of the electrolyte layer 30 may be inhibited. The end portion of the electrolyte layer 30 may be an outermost portion that is contiguous with a side surface of the electrolyte layer 30. The inactive member 40 may extend up to the outermost portion that is contiguous with the side surface of the electrolyte layer 30. The inactive member 40 may be apart from the anode 20, more specifically, from the first anode active material layer 22. The inactive member 40 may extend to the end portion of the electrolyte layer 30 but may not come in contact with the anode 20. For example, the inactive member 40 may fill the space that extends from one side surface of the cathode 30 to the end portion of the electrolyte layer 30.

Referring to FIGS. 4 and 5, a width of the inactive member 40 extending from one side surface of the cathode 10 to an end portion of the electrolyte layer 30 may be, for example, about 1 % to about 30 %, about 1 % to about 25 %, about 1 % to about 20 %, about 1 % to about 20 %, about 1 % to about 15 %, about 1 % to about 10 %, or about 1 % to about 5 %, with respect to a width between one side surface of the cathode 10 and the other side surface opposite to the one side surface. If (e.g., when) the width of the inactive member 40 is excessively large, the energy density of the solid secondary battery 1 may decrease. If (e.g., when) the width of the inactive member 40 is too small, the effect of placing the inactive member 40 may be negligible.

The surface area of the cathode 10 may be smaller than the surface area of the electrolyte layer 30 that is in contact with the cathode 10. The inactive member 40 compensates for the difference in surface area between the cathode 10 and the electrolyte layer 30, by around (e.g., surrounding) the side surface of the cathode 10. Because the surface area of the inactive member 40 compensates for the difference between the surface area of the cathode 10 and the surface area of the electrolyte layer 30, cracking of the electrolyte layer 30 caused by a pressure difference during the pressing process may be effectively suppressed or reduced. For example, the sum of the surface area of the cathode 10 and the surface area of the inactive member 40 may be equal to the surface area of the electrolyte layer 30. For example, the electrolyte layer 30 may be a solid electrolyte layer.

For example, the surface area of the cathode 10 may be less than 100 %, less than 99 %, less than 98 %, less than 97 %, less than 96 %, or less than 95 %, with respect to the surface area of the electrolyte layer 30. For example, the surface area of the cathode 10 may be about 50 % to less than 100 %, about 50 % to about 99 %, about 55 % to about 98 %, about 60 % to about 97 %, about 70 % to about 96 %, about 80 % to about 95 %, or about 85 % to about 95 %, with respect to the surface area of the electrolyte layer 30.

If (e.g., when) the surface area of the cathode 10 is equal to or larger than the surface area of the electrolyte layer 30, the likelihood of a short circuit occurring due to a physical contact between the anode 10 and the first anode active material layer 22, or a short circuit occurring due to overcharging of lithium, and/or the like increases. For example, the surface area of the cathode 10 may be equal to the surface area of the cathode active material layer 12. For example, the surface area of the cathode 10 may be equal to the surface area of the cathode current collector 11.

For example, the surface area of the inactive member 40 may be 50 % or less, 40 % or less, 30 % or less, 20 % or less, or 10 % or less, with respect to the surface area of the cathode 10. For example, the surface area of the inactive member 40 may be about 1 % to about 50 %, about 5 % to about 40 %, about 5 % to about 30 %, about 5 % to about 20 %, or about 5 % to about 15 %, with respect to the surface area of the cathode 10.

The surface area S1 of the cathode 10 is smaller than the surface area S4 of the anode current collector 21. For example, the surface area S1 of the cathode 10 may be less than 100 %, less than 99 %, less than 98 %, less than 97 %, less than 96 %, or less than 95 %, with respect to the surface area S4 of the anode current collector 21. For example, the surface area S1 of the cathode 10 may be less than 50 % to 100%, about 50 % to about 99 %, about 55 % to about 98 %, about 60 % to about 97 %, about 70 % to about 96 %, about 80 % to about 95 %, or about 85 % to about 95 %, with respect to the surface area S4 of the anode current collector 21. For example, the surface area S4 of the anode current collector 21 may be equal to the surface area of the anode 20. For example, the surface area S4 of the anode current collector 21 may be equal to the surface area of the first anode active material layer 22.

As utilized herein, "identical" and/or "same" area, length, width, thickness, and/or shape or form, unless otherwise indicated that the area, length, width, thickness, and/or shape or form are deliberately varied to differ from each other, may include "substantially identical" and "substantially the same" area, length, width, thickness, and/or shape or form. For example, the "identical" and/or "same" area, length, width, thickness, and/or shape or form may include instances where an unintended difference in the area, length, width, thickness, and/or shape or form is within a range of less than 3 %, less than 2 %, less than 1 %, less than 0.5 %, or less than 0.1 %,

For example, the thickness of the inactive member 40 may be more than the thickness of the first anode active material layer 22. For example, the thickness of the first anode active material layer 22 may be 50 % or less, 40 % or less, 30 % or less, 20 % or less, or 10 % or less with respect to the thickness of the inactive member 40. For example, the thickness of the first anode active material layer 22 may be about 1 % to about 50 %, about 1 % to about 40 %, about 1 % to about 30 %, about 1 % to about 20 %, or about 1 % to about 10 % with respect to the thickness of the inactive member 40.

The inactive member 40 may be, for example, a gasket. Using a gasket as the inactive member 40 may effectively inhibit crack formation in the electrolyte layer 30 due to a pressure differential during the press process.

For example, the inactive member 40 may have a monolayer structure. In other embodiments, although not illustrated in the drawings, the inactive member 40 may have a multilayer structure. In the inactive member 40 having a multilayer structure, each layer may have a different composition. The inactive member 40 having a multilayer structure may have, for example, a two-layer structure, a three-layer structure, a four-layer structure, or a five-layer structure. The inactive member 40 having a multilayer structure may include, for example, one or more adhesive layers and one or more support layers. For example, the adhesive layers may effectively prevent or reduce separation between the cathode 10 and the electrolyte layer 30 due to volume changes of the cathode 10 that occur during charging and discharging of the cathode 10 and may improve a film strength of the inactive member 40 by providing adhesion between the support layer and other layers. The support layer may provide support to the inactive member 40, prevent or reduce non-uniformity of the pressure exerted on the electrolyte layer 30 during the press process or charging and discharging processes, and prevent or reduce deformations in shape of the solid secondary battery 1 being produced.

The inactive member 40 may have, for example, a flame-retardant inactive member. Flame retardancy provided by the flame-retardant inactive member may reduce the risk of thermal runaway and explosion of the solid secondary battery 1. Consequently, the safety of the solid secondary battery 1 may further improve. As the flame-retardant inactive member absorbs residual moisture inside the solid secondary battery 1, degradation of the solid secondary battery 1 may be prevented or reduced, improving the lifespan characteristics of the solid secondary battery 1.

The flame-retardant inactive member may include, for example, a matrix and a filler. For example, the matrix may include a substrate and a reinforcing material. For example, the matrix may include a fibrous substrate and a fibrous reinforcing material. As the matrix includes the substrate, the matrix may have elasticity. The matrix may be placed at one or more suitable locations and effectively accommodate volume changes of the solid secondary battery 1 during charging and discharging. The substrate included in the matrix may include, for example, a first fibrous material. As the substrate includes the first fibrous material, volume changes of the cathode 30 during charging and discharging of the solid secondary battery 1 may be effectively accommodated, and deformation of the inactive member 40 caused by volume changes of the cathode 30 may be effectively suppressed or reduced. For example, the first fibrous material may be a material having an aspect ratio of 2 or more, 5 or more, 10 or more, 20 or more, or 50 or more. For example, the first fibrous material may be a material having an aspect ratio of about 5 to about 1,000, about 20 to about 1,000, or about 50 to about 1,000. For example, the first fibrous material may be an insulating material. Because the first fibrous material is an insulating material, a short circuit that may occur between the cathode 30 and the anode 20 due to lithium dendrites and/or the like during charging and discharging of the solid secondary battery 1 may be effectively prevented or reduced. Examples of the first fibrous material may include at least one selected from among pulp fibers, insulating polymer fibers, and ionically conductive polymer fibers. As the matrix includes the reinforcing material, strength of the matrix may improve. The matrix may serve to prevent or reduce the solid secondary battery 1 from undergoing an excessive volume change during charging and discharging and protect the solid secondary battery 1 from deformation. The reinforcing material included in the matrix may include, for example, a second fibrous material. As the reinforcing material includes the second fibrous material, a more substantially uniform increase of the strength of the matrix may be achieved. For example, the second fibrous material may be a material having an aspect ratio of 2 or more, 3 or more, 5 or more, or 10 or more. For example, the first fibrous material may be a material having an aspect ratio of about 2 to about 100, about 3 to about 100, about 5 to about 100, or about 10 to about 100. For example, the second fibrous material may be a flame-retardant material. Because the second fibrous material is a flame-retardant material, a fire caused by thermal runaway during charging and discharging of the solid secondary battery 1 or by an external impact may be effectively suppressed or reduced. For example, the second fibrous material may be glass fibers, metal oxide fibers, ceramic fibers, and/or the like.

The flame-retardant inactive member may include a filler in addition to the matrix. The filler may be provided inside the matrix, may be provided on a surface of the matrix, or may be provided both (e.g., simultaneously) inside and on a surface of the matrix. Examples of the filler may include an inorganic material. The filler included in the flame-retardant inactive member may be for example, a moisture getter. For example, the filler may remove residual moisture from the solid secondary battery 1 by adsorbing to moisture at a temperature of less than 100 °C, thereby preventing or reducing degradation of the solid secondary battery 1. Further, if (e.g., when) the temperature of the solid secondary battery 1 increases to 150 °C or higher due to thermal runaway caused by an external impact, or during charging and discharging of the solid secondary battery 1, the filler may release the adsorbed moisture to effectively prevent or reduce the solid secondary battery 1 from catching fire. For example, the filer may be a flame retardant. For example, the filler may be a metal hydroxide having hygroscopicity. The metal hydroxide included in the filler may be, for example, $Mg(OH)_2$, $Fe(OH)_3$, $Sb(OH)_3$, $Sn(OH)_4$, $Tl(OH)_3$, $Zr(OH)_4$, $Al(OH)_3$, or a combination thereof. The amount of the filler included in the flame-retardant inactive member may be, for example, about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight, with respect to 100 parts by weight of a flame-retardant inactive member 4.

The flame-retardant inactive member may include a binder, for example. The binder may include, for example, a curable polymer or a non-curable polymer. The curable polymer may be a polymer that cures by heat and/or pressure. For example, the curable polymer may be solid at room temperature. Examples of the flame-retardant inactive member 40 may include a heat-press curable film and/or a cured product thereof. The thermal-press curable polymer of the heat-press curable film may be TSA-66 by Toray, for example.

To the substrate, the reinforcing material, the filler, and the binder described, the flame-retardant inactive member may further include other materials. For example, the flame-retardant inactive member may further include at least one selected from among paper, an insulating polymer, an ionically conductive polymer, an insulating inorganic material, an oxide-based solid electrolyte, and a sulfide-based solid electrolyte. The insulating polymer may be an olefin-based polymer such as polypropylene (PP), polyethylene (PE), and/or the like.

The substrate or the reinforcing material included in the flame-retardant inactive member may have a density of, for example, about 10 % to about 300 %, about 10 % to about 150 %, about 10 % to about 140 %, about 10 % to about 130 %, or about 10 % to about 120 %, relative to the density of the cathode active material included in a cathode active material layer 12.

The inactive member 40 may be a member not containing any material with electrochemical activity, i.e., electrode active material. The electrode active material may be a material that absorbs/desorbs lithium. The inactive member 40 may be a member composed of a material other than electrode active materials that is utilized in the art.

## Solid Secondary Battery

A sold secondary battery according to one or more embodiments may include the cathode layer; the anode layer, and the electrolyte layer provided between the cathode layer and the anode layer. The anode layer may include an anode current collector and a first anode active material layer provided on one side of the anode current collector.

The anode layer may include an anode current collector and a lithium host layer provided on one side of the anode current collector, wherein the lithium host layer may include a lithium host structure, the lithium host structure may include one or more lithium hosts, the lithium hosts may include a carbon-based lithium host, a metal-based lithium host, a polymer-based lithium host, or a combination thereof, and the anode layer may include a first inactive member provided on one side surface of the anode layer.

The solid secondary battery may include, as a cathode active material, a lithium-containing sulfide-based cathode active material. In some embodiments, blocking of ion and/or electron transport paths due to a volume expansion of a lithium-free sulfide-based cathode active material, e.g., sulfur (S), during initial discharging may be prevented or reduced. By preventing or reducing such blocking of ion and/or electron transport paths, cycling performance of the solid secondary battery may be improved.

Because the solid secondary battery includes the lithium host layer on the anode layer, the lithium hosts act as a support while lithium metal is plated on the anode layer, and therefore, non-uniformity of lithium plating may be reduced or suppressed or reduced. During charging and discharging of the solid secondary battery, formation and growth of lithium dendrites and/or dead lithium may be reduced or suppressed or reduced. As a result, a short circuit in the solid secondary battery may be prevented or reduced and cycling performance of the solid secondary battery may improve.

Because the solid secondary battery includes the lithium host layers on the anode layer, drastic volume changes of the anode layer during charging and discharging of the solid secondary battery may be reduced or suppressed or reduced. Because drastic volume changes of the anode layer are reduced or suppressed or reduced, during charging and discharging of the solid secondary battery, degradations of the solid secondary battery due to volume changes of the solid secondary battery may be reduced or suppressed or reduced, and the cycling performance of the solid secondary battery may improve.

Inclusion of the solid electrolyte layer in the solid secondary battery may prevent or reduce the migration of polysulfides to the anode layer that occurs during charging and discharging of the lithium-containing sulfide-based cathode active material. As a result, side reactions between polysulfides and an anode active material may be inhibited.

Because the inactive member is provided on one side surface of the anode layer, it may be possible to more effectively suppress or reduce, during charging and discharging of the solid secondary battery, the formation and growth of lithium dendrites and/or short circuits between the cathode and lithium metal that melts at high temperatures. As a result, short-circuits in the solid secondary battery may be prevented or reduced and lifespan characteristics of the solid secondary battery may improve.

Referring to FIGS. 3 to 6, a solid secondary battery 1 may include a cathode layer 10; an anode layer 20; and an electrolyte layer 30 provided between the cathode layer 10 and the anode layer 20. The anode layer 20 may include an anode current collector 21 and a first anode active material layer 22 provided on one side of the anode current collector 21.

**Cathode**

For more details of the cathode, refer to the cathode described herein.

**Anode layer**

**Anode layer: Anode Active Material**

Referring to FIGS. 3 to 6, an anode layer 20 may include a first anode active material layer 22. The first anode active material layer 22 may include, for example, an anode active material and a binder.

The anode active material included in the first anode active material layer 22 may be, for example, an anode material capable of forming an alloy or a compound with lithium.

The anode active material included in the first anode active material layer 22 may have, for example, a particulate form. The anode active material having a particulate form may have an average particle diameter of, for example, 4 $\mu$m or less, 3 $\mu$m or less, 2 $\mu$m or less, 1 $\mu$m or less, 500 nm or less, 300 nm or less, or 100 nm or less. For example, the anode active material having a particulate form (may be in the form of particles) may have an average particle diameter of about 10 nm to about 4 $\mu$m, about 10 nm to about 3 $\mu$m, about 10 nm to about 2 $\mu$m, about 10 nm to about 1 $\mu$m, about 10 nm to about 500 nm, about 10 nm to about 300 nm, or about 10 nm to about 100 nm. With the anode active material having an average particle diameter within the described ranges, reversible absorption and/or desorption of lithium during charging/discharging may be facilitated. The average particle diameter of the anode active material may be, for example, a median particle diameter (D50) as measured by a laser-type or kind particle size distribution analyzer.

The anode active material included in the first anode active material layer 22 may include, for example, at least one selected from a carbonaceous anode active material and a metal or metalloid anode active material.

The carbonaceous anode active material may include, for example, amorphous carbon, crystalline carbon, porous carbon, or a combination thereof.

The carbonaceous anode active material may be, for example, an amorphous carbon. Examples of the amorphous carbon may include carbon black (CB), acetylene black (AB), furnace black (FB), Ketjen black (KB), graphene, and/or the like; however, the carbonaceous anode active material is not necessarily limited to the aforementioned examples and may be any material categorized as amorphous carbon in the art. Amorphous carbon is carbon with no crystalline structure or an extremely low degree of crystallinity and as such, may be distinguished from crystalline carbon or graphitic carbon.

The carbonaceous anode active material may be porous carbon, for example. For example, pores included in the porous carbon may have a pore volume of about 0.1 cc/g to about 10.0 cc/g, about 0.5 cc/g to about 5 cc/g, or about 0.1 cc/g to about 1 cc/g. For example, pores included in the porous carbon may have an average pore diameter of about 1 nm to about 50 nm, about 1 nm to about 30 nm, or about 1 nm to about 10 nm. The BET specific surface of the porous carbon may be, for example, about 100 m$^2$/g to about 3,000 m$^2$/g.

The metal or metalloid anode active material may include at least one selected from among gold (Au), platinum (Pt), palladium (Pd), silicon (Si), silver (Ag), aluminum (Al), bismuth (Bi), tin (Sn), and zinc (Zn), but is not necessarily limited to the aforementioned materials. The metal or metalloid anode active material may be any metal anode active material or metalloid anode active material available in the art that can form an alloy or a compound with lithium. For example, nickel (Ni) does not form an alloy with lithium and is therefore not regarded as a metal anode active material.

Among the described anode active materials, the first anode active material layer 22 may include a single anode active material, or may include a mixture of multiple different types (kinds) of anode active materials. For example, the first anode active material layer 22 may include amorphous carbon alone or may include one or more selected from among gold (Au), platinum (Pt), palladium (Pd), silicon (Si), silver (Ag), aluminum (Al), bismuth (Bi), tin (Sn), and zinc (Zn). In some embodiments, the first anode active material layer 22 may include a mixture of amorphous carbon with at least one selected from among gold (Au), platinum (Pt), palladium (Pd), silicon (Si), silver (Ag), aluminum (Al), bismuth (Bi), tin (Sn), and zinc (Zn). A mixing ratio of amorphous carbon to the metal(s) described herein, such as gold (Au) in such a mixture may be about 99:1 to about 1:99, about 10:1 to about 1:2, about 5:1 to about 1:1, or about 4:1 to about 2:1 in weight ratio, but without being necessarily limited thereto, may be selected according to required characteristics of the solid secondary battery 1. As the anode active material has the described compositions, cycling performance of the solid secondary battery 1 may further improve.

The anode active material included in the first anode active material layer 22 may include, for example, a mixture of first particles composed of amorphous carbon, and second particles composed of a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), and/or the like. In other embodiments, the metalloid may be a semiconductor. The amount of the second particles may be about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt%, with respect to the total weight of the mixture. As the amount of the second particles is within the described ranges, a cycling performance of the solid secondary battery 1 may further improve.

In other embodiments, the first anode active material layer 22 may include a composite anode active material. For example, the composite anode active material may include a carbonaceous support and a metal-based anode active material supported on the carbonaceous support. With the composite anode active material having the described structure, uneven distribution of the metal-based anode active material within the first anode active material layer may be prevented or reduced, giving rise to a substantially uniform distribution. As a result, the cycling performance of the solid secondary battery 1 including the first anode active material layer 22 may further improve.

Examples of the metal-based anode active material supported on the carbonaceous support may include a metal, a metal oxide, a metal-metal oxide composite, or a combination thereof. Examples of the metal may include gold (Au), platinum (Pt), palladium (Pd), silicon (Si), silver (Ag), aluminum (Al), bismuth (Bi), tin (Sn), tellurium (Te), zinc (Zn), and/or the like. Examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, zinc (Zn) oxide, and/or the like. Examples of the metal oxide may include $Au_xO_y$ ($0<x\leq2$ and $0<y\leq3$), $Pt_xO_y$ ($0<x\leq1$ and $0<y\leq2$), $Pd_xO_y$ ($0<x\leq1$ and $0<y\leq1$), $Si_xO_y$ ($0<x\leq1$ and $0<y\leq2$), $Ag_xO_y$ ($0<x\leq2$ and $0<y\leq1$), $Al_xO_y$ ($0<x\leq2$ and $0<y\leq3$), $Bi_xO_y$ ($0<x\leq2$ and $0<y\leq3$), $Sn_xO_y$ ($0<x\leq1$ and $0<y\leq2$), $Te_xO_y$ ($0<x\leq1$ and $0<y\leq3$), $Zn_xO_y$ ($0<x\leq1$ and $0<y\leq1$), or a combination thereof. Examples of the metal-metal oxide composite may include a composite of Au and $Au_xO_y$ ($0<x\leq2$ and $0<y\leq3$), a composite of Pt and $Pt_xO_y$ ($0<x\leq1$ and $0<y\leq2$), a composite of Pd and $Pd_xO_y$ ($0<x\leq1$ and $0<y\leq1$), a composite of Si and $Si_xO_y$ ($0<x\leq1$ and $0<y\leq2$), a composite of Ag and $Ag_xO_y$ ($0<x\leq2$ and $0<y\leq1$), a composite of Al and $Al_xO_y$ ($0<x\leq2$ and $0<y\leq3$), a composite of Bi and $Bi_xO_y$ ($0<x\leq2$ and $0<y\leq3$), a composite of Sn and $Sn_xO_y$ ($0<x\leq1$ and $0<y\leq2$), a composite of Te and $Te_xO_y$ ($0<x\leq1$ and $0<y\leq3$), a composite of Zn and $Zn_xO_y$ ($0<x\leq1$ and $0<y\leq1$), or a combination thereof.

The carbonaceous support may be, for example, an amorphous carbon. Examples of the amorphous carbon may include carbon black (CB), acetylene black (AB), furnace black (FB), Ketjen black (KB), graphene, activated carbon, carbon nanofibers (CNF), carbon nanotubes (CNT), and/or the like. However, the amorphous carbon is not necessarily limited to the aforementioned examples but may be any material classified as amorphous carbon in the art. Amorphous carbon is carbon with no crystalline structure or an extremely low degree of crystallinity and as such, may be distinguished from crystalline carbon or graphitic carbon. The carbonaceous material may be, for example, a carbonaceous anode active material.

The composite anode active material may have, for example, a particulate form. The particle diameter of the composite anode active material having a particulate form may be, for example, from about 10 nm to about 4 μm, about 10 nm to about 1 μm, about 10 nm to about 500 nm, about 10 nm to about 200 nm, or about 10 nm to about 100 nm. With the composite anode active material having a particle diameter within the described ranges, reversible absorption and/or desorption of lithium during cycling may be further facilitated. The metal-based anode active material supported on the support may have, for example, a particulate form. For example, the metal-based anode active material may have a particle diameter of about 1 nm to about 200 nm, about 1 nm to about 150 nm, about 5 nm to about 100 nm, or about 10 nm to about 50 nm. The carbonaceous support may have, for example, a particulate form. For example, the carbonaceous support may have a particle diameter of from about 10 nm to about 2 μm, about 10 nm to about 1 μm, about 10 nm to about 500 nm, about 10 nm to about 200 nm, or about 10 nm to about 100 nm. With the carbonaceous support having a particle diameter in the described ranges, a more substantially uniform distribution within the first anode active material layer may be achieved. For example, the carbonaceous support may be nanoparticles (in the form of nanoparticles) having a particle diameter of 500 nm or less. The particle diameter of the composite anode active material, the particle diameter of the metal-based anode active material, and the particle diameter of the carbonaceous support may be, for example, an average particle diameter. The average particle diameter may be, for example, a median particle diameter (D50) as measured by a laser-type or kind particle size distribution analyzer. In some embodiments, the average particle diameter may be automatically determined utilizing a software, or manually determined utilizing a manual, from an electron microscope image.

**Anode: Binder**

The binder included in the first anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like. However, the binder is not necessarily limited to the aforementioned examples and may be any material available as a binder in the art. The binder may be composed of a single type or kind of binder, or multiple binders of different types (kinds).

As the first anode active material layer 22 may include a binder, the first anode active material layer 22 may be stabilized on the anode current collector 21. Further, crack formation in the first anode active material layer 22 may be suppressed or reduced, despite volume changes and/or displacement of the first anode active material layer 22 during charging and discharging processes. For example, if (e.g., when) the first anode active material layer 22 does not contain any binder, the first anode active material layer 22 may be easily delaminated from the anode current collector 21. At an area where the anode current collector 21 is exposed as a result of delamination of the first anode active material layer 22 from the anode current collector 21, the anode current collector 21 may come in contact with the electrolyte layer 30, thus increasing the likelihood of a short circuit. For example, the first anode active material layer 22 may be prepared by applying and drying a slurry having dispersed therein materials forming the first anode active material layer 22 on the anode current collector 21. By including a binder in the first anode active material layer 22, stable dispersion of the anode active materials within the slurry may be achieved. For example, if (e.g., when) applying the slurry onto the anode current collector 21 by a screen-printing method, it may be possible to prevent or reduce the screen from clogging (for example, clogging by agglomerates of the anode active material).

### Anode: Other Additives

The first anode active material layer 22 may further include other additives utilized in a solid secondary battery, such as a filler, a coating agent, a dispersing agent, an ionically conductive aid, and/or the like.

### Anode: Solid Electrolyte

The first anode active material layer 22 may further include a solid electrolyte. The solid electrolyte may be, for example, a material selected from solid electrolytes included in the electrolyte layer 30. The solid electrolyte included in the first anode active material layer 22 may act as a reaction point where formation of lithium metal starts, may act as a space where the formed lithium metal is stored, or may act as a route for transferring lithium ions in the first anode active material layer 22. The solid electrolyte may not be provided.

For example, in the first anode active material layer 22, the concentration of the solid electrolyte may be high in a region adjacent to the electrolyte layer 30 and low in a region adjacent to the anode current collector 21. For example, the solid electrolyte in the first anode active material layer 22 may have a concentration gradient in which the concentration gradually decreases from a region adjacent to the electrolyte layer 30 to a region adjacent to the anode current collector 21.

### Anode: First Anode Active Material Layer

The ratio (B/A) of initial charge capacity (B) of the first anode active material layer 22 to initial charge capacity (A) of the cathode active material layer may be about 0.005 to about 0.45. The initial charge capacity of the cathode active material layer 12 may be determined at a maximum charging voltage vs. Li/Li$^+$ from a first open circuit voltage. The initial charge capacity of the first anode active material layer 22 may be determined at 0.01 V vs. Li/Li$^+$ from a second open circuit voltage.

The maximum charging voltage may be determined by the type or kind of the cathode active material. The maximum charging voltage may be, for example, 1.5 V, 2.0 V, 2.5 V, 3.0 V, 3.5 V, 4.0 V, 4.2 V, or 4.3 V. For example, the maximum charging voltage of Li$_2$S or a Li$_2$S composite may be 2.5 V vs. Li/Li$^+$. For example, the maximum charging voltage of Li$_2$S or a Li$_2$S composite may be 3.0 V vs. Li/Li$^+$. The ratio (B/A) of initial charge capacity (B) of the first anode active material layer 22 to initial charge capacity (A) of the cathode active material layer may be, for example, about 0.01 to about 0.3, about 0.01 to about 0.2, or about 0.05 to about 0.1. The initial charge capacity (mAh) of the cathode active material layer 12 may be obtained by multiplying the charge specific capacity (mAh/g) of the cathode active material layer 12 by the mass (g) of a cathode active material in the cathode active material layer 12. If (e.g., when) multiple types (kinds) of cathode active materials are utilized, the product of charge specific density × mass may be calculated for each cathode active material, and the sum of these products may be defined as initial charge capacity of the cathode active material layer 12. The initial charge capacity of the first anode active material layer 22 may also be calculated in substantially the same manner. The initial charge capacity of the first anode active material layer 22 may be obtained by multiplying the charge specific density (mAh/g) of an anode active material by the mass of the anode active material in the first anode active material layer 22. If (e.g., when) multiple types (kinds) of anode active materials are utilized, the product of charge specific density × mass may be calculated for each anode active material, and the sum of these products may be defined as initial charge capacity of the first anode active material layer 22. The charge specific density of each of the cathode active material and the anode active material may be measured utilizing a solid half-cell utilizing lithium metal as a counter electrode. The initial charge capacity of each of the cathode active material layer 12 and the first anode active material layer 22 may be directly measured by utilizing a solid half-cell at a constant current density, for example, 0.1 mA/cm$^2$. For the cathode, this measurement may be made for an operating voltage from a 1$^{st}$ open circuit voltage (OCV) to a maximum charge voltage, for example, 3.0 V (vs. Li/Li$^+$). For the anode, this measurement may be made for an operating voltage from a second OCV to 0.01 V with respect to the anode, for example, lithium metal. For example, the solid half cell having the cathode active material layer may be charged with a constant current of 0.1 mA/cm$^2$ to 3.0 V from the 1$^{st}$ OCV, and the solid half-cell having the first anode active material layer may be charged with a constant current of 0.1 mA/cm$^2$ to 0.01 V from the second OCV. For example, the current density during the constant current charging may be 0.2 mA/cm$^2$ or 0.5 mA/cm$^2$. The solid half-cell having the cathode active material layer may be charged, for example, to 2.5 V, 2.0 V, 3.5 V, or 4.0 V from the first OCV. The maximum charge voltage of the cathode active material layer may be determined according to the maximum voltage of a cell that satisfies the safety conditions described in JISC8712:2015 by Japanese Standards Association.

If (e.g., when) the initial charge capacity of the first anode active material layer 22 is excessively small, the thickness of the first anode active material layer 22 becomes extremely small, and as a result, lithium dendrites formed between the first anode active material layer 22 and the anode current collector 21 during repeated charging/discharging processes may cause collapse of the first anode active material layer 22, thus making it difficult to improve cycling performance of the solid secondary battery 1. If (e.g., when) the charge capacity of the first anode active material layer 22 excessively increases, the energy density of the solid secondary battery 1 may decrease, and the internal resistance of the solid secondary battery 1 by the first anode active material layer 22 may increase, thus making it difficult to achieve improved cycling performance of the solid secondary battery 1.

For example, the first anode active material layer 22 may have a thickness of 50 % or less, 40 % or less, 30 % or less, 20 % or less, 10 % or less, or 5 % or less, with respect to the thickness of the cathode active material layer 12. For example, the first anode active material layer 22 may have a thickness of about 1 % to about 50 %, about 1 % to about 40 %, about 1 % to about 30 %, about 1 % to about 20 %, about 1 % to about 10 %, or about 1 % to about 5 %, with respect to the thickness of the cathode active material layer 12. For example, the first anode active material layer 22 may have a thickness of about 1 μm to about 20 μm, about 2 μm to about 15 μm, or about 3 μm to about 10 μm. If (e.g., when) the first anode active material layer 22 is excessively thin, lithium dendrites formed between the first anode active material layer 22 and the anode current collector 21 may cause the first anode active material layer 22 to disintegrate, making it difficult to achieve improved cycling performance of the solid secondary battery 1. If (e.g., when) the thickness of the first anode active material layer 22 excessively increases, the energy density of the solid secondary battery 1 may decrease, and the internal resistance of the solid secondary battery 1 by the first anode active material layer 22 may increase, thus making it difficult to achieve improved cycling performance of the solid secondary battery 1. With decreasing thickness of the first anode active material layer 22, for example, the initial charge capacity of the first anode active material layer 22 may also decrease.

**Anode: Second Anode Active Material Layer**

Referring to FIG. 5, the solid secondary battery 1 may further include, for example, a second anode active material layer 24 that is provided between the anode current collector 21 and the first anode active material layer 22 after charging. The second anode active material layer 24 may be a metal layer including lithium or a lithium alloy. The metal layer may include lithium or a lithium alloy. Therefore, the second anode active material layer 24, being a metal layer containing lithium, may serve as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but without being limited thereto, may be any material available as a lithium alloy in the art. The second anode active material layer 24 may be composed of one of such alloys, or lithium, or may be composed of one or more suitable types (kinds) of alloys. The second anode active material layer 24 may be, for example, a plated layer. For example, the second anode active material layer 24 may be plated between the first anode active material layer 22 and the anode current collector 21 during a charging process of the solid secondary battery 1.

The second anode active material layer 24 is not limited to any particular thickness, but may have a thickness of, for example, about 1 μm to about 500 μm, about 1 μm to about 200 μm, about 1 μm to about 150 μm, about 1 μm to about 100 μm, or about 1 μm to about 50 μm. If (e.g., when) the thickness of the second anode active material layer 24 is excessively small, the second anode active material layer 24 may fail to sufficiently function as a lithium reservoir. If (e.g., when) the thickness of the second anode active material layer 24 is excessively large, the mass and volume of the solid secondary battery 1 may increase, and the cycling performance of the solid secondary battery 1 may be more likely to deteriorate.

In other embodiments, in the solid secondary battery 1, the second anode active material layer 24 may be provided between the anode current collector 21 and the first anode active material layer 22 prior to assembly of the solid secondary battery 1, for example. In a case in which the second anode active material layer 24 is positioned between the anode current collector 21 and the first anode active material layer 22 prior to assembly of the solid-state secondary battery 1, the second anode active material layer 24 is a metal layer containing lithium and thus acts as a lithium reservoir. For example, prior to assembly of the solid secondary battery 1, a lithium foil may be positioned between the anode current collector 21 and the first anode active material layer 22.

In a case in which the second anode active material layer 24 is plated by charging after assembly of the solid secondary battery 1, because the second anode active material layer 24 is not included at the time of assembly of the solid secondary battery 1, energy density of the solid secondary battery 1 may increase. If (e.g., when) charging the solid secondary battery 1, the charging may be performed to exceed the charging capacity of the first anode active material layer 22. The first anode active material layer 22 may be then overcharged. At the beginning of the charging, lithium may be absorbed into the first anode active material layer 22. The anode active material included in the first anode active material layer 22 may form an alloy or a compound with lithium ions moved from the cathode 10. If (e.g., when) the charging is performed exceeding the capacity of the first anode active material layer 22, lithium may be precipitated, for example, on the back surface of the first anode active material layer 22, for example, between the anode current collector 21 and the first anode active material layer 22, and the precipitated lithium then may form a metal layer that corresponds to the second anode active material layer 24. The second anode active material layer 24 may be a metal layer mainly composed of lithium (i.e., metal lithium). This result may be attributed to the fact that the anode active material included in the first anode active material layer 22 includes a material that forms an alloy or compound with lithium. During discharge, lithium in metal layers, for example, in the first anode active material layer 22 and the second anode active material layer 24, may be ionized and migrate toward the cathode 10. Therefore, lithium may be utilized as an anode active material in the solid secondary battery 1. In some embodiments, the first anode active material layer 22 covers the second anode active material layer 24, and as such, may function as a protective layer for the metal layer, for example, the second anode active material layer 24, while inhibiting precipitation and growth of lithium dendrites. Therefore, short circuiting and capacity fading in the solid secondary battery 1 may be inhibited, and consequently, cycling performance of the solid secondary battery 1 may improve. Further, if (e.g., when) the second anode active material layer 24 is provided by charging after assembly of the solid secondary battery 1, the anode layer 20, for example, the anode current collector 21, the first anode active material layer 22, and the area therebetween are a Li-free region free of Li while the solid secondary battery 1 is in the initial state or a fully discharged state.

**Anode: Anode Current Collector**

The anode current collector 21 may be formed of a material that does not react (or not substantially reach) with lithium, for example, does not form an alloy or a compound with lithium. Examples of the material forming the anode current collector 21 may include copper (Cu), stainless steel, titanium (Ti), iron (Fe), cobalt (Co), nickel (Ni), and/or the like. However, the material forming the anode current collector 21 is not necessarily limited to the aforementioned materials but may be any material available as an electrode current collector in the art. The anode current collector 21 may be formed of one type or kind of the aforementioned metals, an alloy of two or more types (kinds) metals thereof, or a covering material. The anode current collector 21 may be, for example, a plate type or kind or a foil type or kind.

Referring to FIG. 2, the solid secondary battery 1 may further include a thin film 23 containing an element capable of forming an alloy with lithium, on one side of the anode current collector 21. The thin film 23 may be positioned between the anode current collector 21 and the first anode active material layer 22. The thin film 23 may include, for example, an element capable of forming an alloy with lithium. Examples of the element capable of forming an alloy with lithium may include gold, silver, zinc, tin, indium, silicon, aluminum, bismuth, and/or the like, but without being limited thereto, any element available in the art that is capable of forming an alloy with lithium may be utilized. The thin film 23 may be composed of one of the aforementioned metals or may be composed of an alloy of one or more suitable kinds of metals. As the thin film 23 is provided on the anode current collector 21, the plated form of the second anode active material layer being plated between the thin film 23 and the first anode active material layer 22 may be further flattened, and cycling performance of the solid secondary battery 1 may further improve.

For example, the thin film 23 may have a thickness of about 1 nm to about 800 nm, about 10 nm to about 700 nm, about 50 nm to about 600 nm, or about 100 nm to about 500 nm. If (e.g., when) the thickness of the thin film 23 is less than 1 nm, it may be difficult to achieve functions attributable to the thin film 23. If (e.g., when) the thickness of the thin film 23 is excessively large, it causes the thin film 23 to absorb lithium by itself, decreasing the amount of lithium precipitated at the anode. As a result, the energy density of solid battery may decrease, and cycling performance of the solid secondary battery 1 may deteriorate. The thin film 23 may be positioned on the anode current collectors 21 by a vacuum deposition method, a sputtering method, a plating method and/or the like, but is not limited to the aforementioned methods and may be any method available in the art that is capable of forming the thin film 23.

In one or more embodiments, the anode current collector 21 may include a base film, and a metal layer provided on one side or both (e.g., opposite) sides of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. The polymer may be an insulating polymer. As the base film includes an insulating thermoplastic polymer, in the event of a short circuit, the base film is softened or liquefied, blocking the operation of the battery, to thereby prevent or reduce a rapid increase in electrical current. For example, the metal layer may include copper (Cu), stainless steel, titanium (Ti), iron (Fe), cobalt (Co), nickel (Ni), or an alloy thereof. The anode current collector 21 may further include a metal chip and/or a lead-tab. For detailed descriptions of the base film, the metal layer, the metal chip, and the lead-tab of the anode current collector 21, refer to the cathode current collector 11 described. Because the anode current collector 21 has the described structure, the weight of the anode may be reduced, and as a result, energy density of the anode and the lithium battery may improve.

## Electrolyte Layer

### Electrolyte Layer: Electrolyte

Referring to FIGS. 1 to 6, the electrolyte layer 30 may include an electrolyte provided between the cathode 10 and the anode 20. For example, the electrolyte may include a solid electrolyte, a gel electrolyte, or a combination thereof.

Examples of the solid electrolyte may include a sulfide-based solid electrolyte, an oxide-based solid electrolyte, a polymer solid electrolyte, or a combination thereof.

The solid electrolyte may be, for example, a sulfide-based solid electrolyte. The sulfide-based solid electrolyte may be, for example, at least one selected from among $Li_2S$-$P_2S_5$ and $Li_2S$-$P_2S_5$-LiX, wherein X is a halogen element; $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, and $Li_2S$-$P_2S_5$-$Z_mS_n$, wherein m and n each are a positive number, and Z is Ge, Zn or Ga; $Li_2S$-$GeS_2$, $Li_2S$-$SiS_2$-$Li_3PO_4$, and $Li_2S$-$SiS_2$-$Li_pMO_q$, wherein p and q each are a positive number and M is P, Si, Ge, B, Al, Ga or In; $Li_{7-x}PS_{6-x}Cl_x$, wherein $0{\leq}x{\leq}2$; $Li_{7-x}PS_{6-x}Br_x$, wherein $0{\leq}x{\leq}2$; and $Li_{7-x}PS_{6-x}I_x$, wherein $0{\leq}x{\leq}2$. The sulfide-based solid electrolyte may be prepared by treating starting materials, such as $Li_2S$ and $P_2S_5$, by a method such as melt-quenching, mechanical milling, and/or the like. In some embodiments, following such a treatment, heat treatment may be conducted. The sulfide-based solid electrolyte may be amorphous or crystalline, or may be in a mixed state thereof. In some embodiments, the solid electrolyte may be, among the sulfide-based solid electrolyte materials described herein, a material that contains at least sulfur (S), phosphorus (P), and lithium (Li), as its constitutive elements. For example, the solid electrolyte may be a material including $Li_2S$-$P_2S_5$. If (e.g., when) a sulfide-based solid electrolyte material utilized to form the solid electrolyte contains $Li_2S$-$P_2S_5$, the mixing molar ratio of $Li_2S$ : $P_2S_5$ may be in a range of, for example, about 20 : 80 to about 90 : 10, about 25 : 75 to about 90 : 10, about 30 : 70 to about 70: 30, or about 40: 60 to about 60: 40.

For example, the sulfide-based solid electrolyte may include an argyrodite-type or kind solid electrolyte represented by Formula 1:

$$\text{Formula 1} \qquad Li^+_{12-n-x}A^{n+}X^{2-}_{6-x}V^-_x$$

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or $N_3$, and $1{\leq}n{\leq}5$ and $0{\leq}x{\leq}2$ may be satisfied. For example, the sulfide-based solid electrolyte may be an argyrodite-type or kind compound including one or more selected from $Li_{7-x}PS_{6-x}Cl_x$ wherein $0{\leq}x{\leq}2$, $Li_{7-x}PS_{6-x}Br_x$ wherein $0{\leq}x{\leq}2$, and $Li_{7-x}PS_{6-x}I_x$ wherein $0{\leq}x{\leq}2$. For example, the sulfide-based solid electrolyte may be an argyrodite-type or kind compound including at least one selected from among $Li_6PS_5Cl$, LisPSsBr, and LisPSsl.

An argyrodite-type or kind solid electrolyte may have a density of about 1.5 g/cc to about 2.0 g/cc. Because the argyrodite-type or kind solid electrolyte has a density of 1.5 g/cc or more, internal resistance of the solid secondary battery may decrease, and Li penetration to the electrolyte layer may be more effectively suppressed or reduced.

For example, the oxide-based solid electrolyte may be $Li_{1+x+y}Al_xTi_{2-x}Si_yP_{3-y}O_{12}$ (0<x<2 and 0≤y<3), $BaTiO_3$, $Pb(Zr,Ti)O_3$(PZT), $Pb_{1-x}La_xZr_{1-y}Ti_yO_3$(PLZT) (0≤x<1 and 0≤y<1), $PB(Mg_3Nb_{2/3})O_3$-$PbTiO_3$(PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (0<x<2 and 0<y<3), $Li_xAl_yTi_z(PO_4)_3$ (0<x<2, 0<y<1, and 0<z<3), $Li_{1+x+y}(Al, Ga)_x(Ti, Ge)_{2-x}Si_yP_{3-y}O_{12}$ (0≤x≤1 and 0≤y≤1), $Li_xLa_yTiO_3$ (0<x<2 and 0<y<3), $Li_2O$, LiOH, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ (M = Te, Nb, or Zr, and $0{\leq}x{\leq}10$), or a combination thereof. The oxide-based solid electrolyte is produced, for example, by a sintering method and/or the like.

For example, the oxide-based solid electrolyte may be a garnet-type or kind solid electrolyte selected from $Li_7La_3Zr_2O_{12}$ (LLZO) and $Li_{3+x}La_3Zr_{2-a}M_aO_{12}$ (M doped LLZO, M=Ga, W, Nb, Ta, or Al, and 0<a<2 and $0{\leq}x{\leq}10$).

For example, the polymer solid electrolyte may include a mixture of a lithium salt and a polymer, or may include a polymer having an ion-conducting functional group. For example, the polymer solid electrolyte may be a polymer electrolyte that is in a solid state at 25 °C and 1 atm. For example, the polymer solid electrolyte may not contain liquid. The polymer solid electrolyte may include a polymer. For example, the polymer may be polyethylene oxide (PEO), polyvinylidene fluoride (PVDF), vinylidene fluoride-hexafluoropropylene (PVDF-HFP), a poly(styrene-b-ethylene oxide) block or reduce copolymer (PS-PEO), poly(styrene-butadiene), poly(styrene-isoprene-styrene), a poly(styrene-b-divinylbenzene) block or reduce copolymer, a poly(styrene-ethylene oxide-styrene) block or reduce copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), poly(styrene sulfonate) (PSS), and lithium 9,10-diphenylanthracene-2-sulfonate (DPASLi+), or a combination thereof. However, the polymer is not limited to the aforementioned examples and may be any material available in the art that is utilized in polymer electrolyte. The lithium salt may be any lithium salt available in the art. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (x and y are each an integer of 1 to 20), LiCl, LiI, or a mixture thereof. For example, the polymer included in the polymer solid electrolyte may be a compound containing 10 or more repeating units, 20 or more repeating units, 50 or more repeating units, or 100 or more repeating units. For example, the polymer included in the polymer solid electrolyte may have a weight average molecular weight of 1,000 Dalton or more, 10,000 Dalton or more, 100,000 Dalton or more, or 1,000,000 Dalton or more.

For example, the gel electrolyte may be a polymer gel electrolyte. For example, the gel electrolyte may have a gel state while not containing a polymer.

For example, the polymer gel electrolyte may include a liquid electrolyte and a polymer, or an organic solvent and a polymer having an ion-conducting functional group. For example, the polymer gel electrolyte may be a polymer electrolyte that is in a gel state at 25 °C and 1 atm. For example, the polymer gel electrolyte may have a gel state without containing liquid. The liquid electrolyte utilized in the polymer gel electrolytes may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be selected from polymers utilized in solid polymer electrolytes. The organic solvent may be selected from organic solvents utilized in liquid electrolytes. The lithium salt may be selected from lithium salts utilized in polymer solid electrolytes. The ionic liquid may refer to a room-temperature molten salt or a salt that is in a liquid state at room temperature, which only includes (e.g., consists of) ions and has a melting point of room temperature or lower. For example, the ionic liquid may be at least one selected from among compounds containing: a) at least one cation selected from among ammonium, pyrrolidinium, pyridinium, pyrimidinium, imidazolium, piperidinium, pyrazolium, oxazolium, pyridazinium, phosphonium, sulfonium, triazolium, and a mixture thereof; and b) at least one anion selected from among $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $BF_4^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. For example, the polymer solid electrolyte may form a polymer gel electrolyte by impregnation in a liquid electrolyte in a secondary battery. The polymer gel electrolyte may further include inorganic particles. For example, the polymer included in the polymer gel electrolyte may be a compound containing 10 or more repeating units, 20 or more repeating units, 50 or more repeating units, or 100 or more repeating units. For example, the polymer included in the polymer gel electrolyte may have a weight average molecular weight of 500 Dalton or more, 1,000 Dalton or more, 10,000 Dalton or more, 100,000 Dalton or more, or 1,000,000 Dalton or more.

**Electrolyte Layer: Binder**

The electrolyte layer 30 may further include, for example, a binder. Examples of the binder included in the electrolyte layer 30 may include styrene butadiene rubber (SBR), polytetrafluoroethylene, polyvinylidene fluoride, polyethylene, and/or the like. However, the binder is not limited to the aforementioned materials and may be any binder available in the art. The binder in the electrolyte layer 30 may be identical to or different from a binder included in the cathode active material layer 12 and the anode active material layer 22. The binder may not be provided.

The amount of the binder included in the electrolyte layer 30 may be, about 0 wt% to about 10 wt%, about 0 wt% to about 5 wt%, about 0 wt% to about 3 wt%, about 0 wt% to about 1 wt%, about 0 wt% to about 0.5 wt%, or about 0 wt% to about 0.1 wt%, relative to the total weight of the electrolyte layer 30.

Referring to FIG. 6, the anode layer 20 may include the anode current collector 21 and a lithium host layer 22 provided on one surface of the anode current collector 21. On one side surface of the anode layer 20, a first inactive member 42 may be provided.

The first inactive member 42 may be provided on one side surface of the lithium host layer 22, and between the solid electrolyte layer 40 and the anode current collector 21 opposing the solid electrolyte layer 40. The second inactive member 42 may not be provided on one side surface of the anode current collector 21. Referring to FIG. 6, the first inactive member 42 may be provided on one side surface of the anode current collector 21 and the lithium host layer 22. By including the first inactive member 42, a short circuit between the cathode layer 10 and the lithium metal plated on the lithium host layer 22 during charging and discharging of the solid secondary battery 1 may be more effectively prevented or reduced, improving the cycling performance of the solid secondary battery 1. By including the first inactive member 42, cracking of the solid electrolyte layer 30 is prevented or reduced if (e.g., when) manufacturing and/or during charging and discharging the solid secondary battery 1 and as a result, the cycling performance of the solid secondary battery 1 may improve. In the solid secondary battery 1 that does not include the first inactive member 42, due to a non-substantially uniform pressure applied to the solid electrolyte layer 30 that is in contact with the anode layer 20 during manufacturing and/or charging and discharging of the solid secondary battery 1, cracks may form in the solid electrolyte layer 30, giving rise to growth of lithium metal, and thus, the likelihood of a short circuit occurring may increase.

Referring to FIGS. 1 and 2, and FIG. 5, in the solid secondary battery 1, thickness T2 of the first inactive member 42 may be substantially identical to thickness T1 of the lithium host layer 22. Because the sum of the thickness T2 of the first inactive member 42 and the thickness T4 of the anode current collector 21 is substantially identical to the thickness T3 of the anode layer 20, substantially uniform pressure is applied between the anode layer 20 and the solid electrolyte layer 30, and as the anode layer 20 and the solid electrolyte layer 30 are flush against each other sufficiently, interfacial resistance between the anode layer 20 and the solid electrolyte layer 30 may decrease. Further, as the solid electrolyte layer 30 is sufficiently sintered during the press manufacturing process of the solid secondary battery 1, the solid electrolyte layer 30 and the solid secondary battery 1 including the same may have decreased internal resistance.

Hereinbelow, a method of preparing a solid secondary battery according to embodiments is described in more detail.

In some embodiments, a solid secondary battery according to one or more embodiment may be prepared through: obtaining a composite by first milling of a composition containing $M_2S$, an alkali metal salt and a two-dimensional carbonaceous structure, and then adding two-dimensional carbon nanostructures to the composition, followed by second milling; preparing a cathode by utilizing a composition containing the composite mixed with a binder; preparing an anode; and disposing an electrolyte between the cathode and the anode.

In some embodiments, a solid secondary battery according to one or more embodiment may be prepared through: milling of a composition containing $M_2S$, an alkali metal salt and a two-dimensional carbonaceous structure; adding two-dimensional carbon nanostructures to the composition thereby obtaining a composite; milling the composite; preparing a cathode by utilizing a composition containing the composite that is mixed with a binder; preparing an anode; and disposing an electrolyte between the cathode and the anode.

The first milling of the composition containing $M_2S$, an alkali metal salt and a two-dimensional carbonaceous structure may be performed at about 300 rpm to about 10,000 rpm for about 5 hours to about 15 hours, for example, for 10 hours, so that the size of $M_2S$ can decrease to 100 nm or less.

The second milling after adding two-dimensional carbon nanostructures to the milled product may be performed at about 3,300 rpm to about 10,000 rpm for about 5 hours to about 15 hours, for example, for 10 hours.

In the obtaining the composite, a carbonaceous material may be further added to the composition. In some embodiments, a carbonaceous material may be further added to the composition in the milling of the composition.

If (e.g., when) preparing a cathode utilizing the two-dimensional carbonaceous structure, the cathode is prepared according to a dry method; however, the cathode may be prepared by wet methods such as dip coating and spin coating.

A two-dimensional carbonaceous structure layer may be formed by coating and drying on a substrate, a composition containing a two-dimensional carbonaceous structure, i.e., graphene. The composition may contain a binder, such as polyvinylidene fluoride. The substrate may be a cathode current collector.

Next, a cathode active material layer-forming composition containing lithium sulfide, a binder, a solid electrolyte, and a solvent may be prepared, and then a cathode sheet may be prepared therefrom, and a cathode layer may be prepared by laminating the cathode sheet onto the two-dimensional carbonaceous structure layer.

The cathode layer prepared according to this process may have improved overvoltage characteristics and high-voltage stability during charging and discharging, due to $\pi$-$\pi$ bonds on graphene.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

The present disclosure will be described in greater detail through the following examples and comparative examples. However, it will be understood that the examples are provided only to illustrate the present disclosure and not to be construed as limiting the scope of the present disclosure.

**EXAMPLES**

**Preparation of Composite Cathode Active Material**

**Example 1: 30 % Li$_2$S - 20 % LiI - 10 % Graphene + 40 % SE**

**Step (act or task) 1**

Li$_2$S and LiI were mixed in a weight ratio of 30:20. The resulting mixture was mechanically milled utilizing a ball mill, to produce a Li$_2$S-LiI composite. The milling was performed under the conditions of 10 hours at 25 °C, 600 rpm.

**(Step 2)**

A Li$_2$S-LiI composite and graphene were mixed in a weight ratio of 50:10. The resulting mixture was mechanically milled utilizing a ball mill, to produce a Li$_2$S-LiI-graphene composite. The milling was performed under the conditions of 10 hours at 25 °C, 600 rpm. The Li$_2$S-LiI-graphene composite was utilized as a composite cathode active material.
As the graphene, graphene purchased from Adeka Corp., having a thickness (average thickness) of 20 nm, a specific surface area of 19 m$^2$/g, and a diameter (average diameter) of about 5 μm was utilized.
The Mohs hardness of Li$_2$S is 0.6 and Mohs hardness of LiI is 2.0. The term "40 % SE" indicates that the amount of solid electrolyte to be added during cathode mixture, which is described herein, is 40 wt%.

**Example 2: 30 % Li$_2$S - 20 % LiI - 7.5 % Graphene + 42.5 % SE**

A Li$_2$S-LiI-graphene composite was prepared in substantially the same manner as Example 1, except that the mixing weight ratio of the Li$_2$S-LiI composite and the graphene was changed to 50:7.5. The term "42.5% SE" indicates that the amount of solid electrolyte to be added during cathode mixture, which is described herein, is 42.5 wt%.

**Example 3: 30 % Li$_2$S - 20 % LiI - 5 % Graphene + 45 % SE**

A Li$_2$S-LiI-graphene composite was prepared in substantially the same manner as Example 1, except that the mixing weight ratio of the Li$_2$S-LiI composite and the graphene was changed to 50:5. The term "45 % SE" indicates that the amount of solid electrolyte to be added during cathode mixture, which is described herein, is 45 wt%.

**Example 4: 32.5 % Li$_2$S - 20 % LiI - 7.5 % Graphene + 40 % SE**

A Li$_2$S-LiI-graphene composite was prepared in substantially the same manner as Example 1, except that the mixing weight ratio of the Li$_2$S-LiI composite and the graphene was changed to 52.5:7.5. The term "40% SE" indicates that the amount of solid electrolyte to be added during cathode mixture, which is described herein, is 40 wt%.

**Example 5: 32.5 % Li$_2$S - 20 % LiI - 7.5 % Graphene (high-BET) + 40 % SE**

A Li$_2$S-LiI-graphene composite was prepared in substantially the same manner as Example 4, except that high-BET graphene was utilized as the graphene.
For the high-BET graphene, graphene having a thickness (average thickness) of 20 nm, a specific surface area of 30 m$^2$/g, and a diameter (average diameter) of about 5 μm was utilized. The term "40% SE" indicates that the amount of solid electrolyte to be added during cathode mixture, which is described herein, is 40 wt%.

**Example 6: 32.5 % Li$_2$S - 20 % LiI - 7.5 % Graphene (N-doped) + 40 % SE**

A Li$_2$S-LiI-graphene composite was prepared in substantially the same manner as Example 4, except that nitrogen-doped (N-doped) graphene was utilized as the graphene.
The N-doped graphene utilized was prepared according to a preparation method described in Nano Lett. 2014, 14, 4821-4827. The term 40% SE" indicates that the amount of solid electrolyte to be added during cathode mixture, which is described herein, is 40 wt%.

**Example 7: 32.5 % Li$_2$S - 20 % LiI - 7.5 % Graphene (F-doped) + 40 % SE**

A Li$_2$S-LiI-graphene composite was prepared in substantially the same manner as Example 4, except that F-doped graphene was utilized as the graphene.

The F-doped graphene was prepared following the same process as described in J. Mater. Chem. A, 2015, 3, 23095-23105 or ACS Appl. Energy Mater. 2022, 5, 11317-11327.

**Comparative Example 1: Li$_2$S-LiI-CNF + 40 % SE**

**Step 1**

A first mixture was prepared by mixing Li$_2$S and LiI in a weight ratio of 30:20. The first mixture was mechanically milled utilizing a ball mill, to produce a Li$_2$S-LiI composite.

The milling conditions were for 10 hours at 25 °C, 600 rpm. The milling energy applied to a sample during milling was 20 G.

**Step 2**

A second mixture was prepared by mixing a Li$_2$S-LiI composite and carbon nanofiber (CNF) in a weight ratio of 50:10. The second mixture was mechanically milled utilizing a ball mill, to produce a Li$_2$S-LiI-CNF composite.

The milling conditions were for 10 hours at 25 °C, 600 rpm. The milling energy applied to a sample during milling was 20 G. The Li$_2$S-LiI-CNF composite was utilized as a composite cathode active material.

**Comparative Example 2: Simple Mixture of Li$_2$S and Graphene**

Li$_2$S and graphene were mixed in a weight ratio of 30:30. The resulting mixture was utilized as a cathode active material as is.

**Comparative Example 3: 30 % Li$_2$S - 7.5 % Graphene - 20 % LiI**

**Step 1**

Li$_2$S and graphene were mixed in a weight ratio of 30:7.5. The resulting mixture was mechanically milled utilizing a ball mill, to produce a Li$_2$S-graphene composite. The milling conditions were for 10 hours at 25 °C, 600 rpm. The milling energy applied to a sample during milling was 20 G.

**Step 2**

A Li$_2$S-graphene composite and LiI were mixed in a weight ratio of 37.5:20. The resulting mixture was mechanically milled utilizing a ball mill, to produce a Li$_2$S-CNF-LiI composite. The milling conditions were for 10 hours at 25 °C, 600 rpm. The milling energy applied to a sample during milling was 20 G. The Li$_2$S-graphene-LiI composite was utilized as a composite cathode active material.

**Comparative Example 4: 30 % Li$_2$S - 20 % SE - 7.5 % Graphene**

**Step 1**

Li$_2$S and Li$_6$PS$_5$Cl solid electrolyte (SE) were mixed in a weight ratio of 30:20. The resulting mixture was mechanically milled utilizing a ball mill, to produce a Li$_2$S-SE composite. The milling conditions were for 10 hours at 25 °C, 600 rpm. The milling energy applied to a sample during milling was 20 G.

**Step 2**

A Li$_2$S-SE composite and graphene were mixed in a weight ratio of 50:7.5. For the graphene, the same graphene as utilized in Example 1 was utilized.

The resulting mixture was mechanically milled utilizing a ball mill, to produce a Li$_2$S-SE-graphene composite. The milling conditions were for 10 hours at 25 °C, 600 rpm. The milling energy applied to a sample during milling was 20 G. The Li$_2$S-SE-graphene composite was utilized as a composite cathode active material.

**Comparative Example 5: Simple blend of 30 % Li$_2$S, 20 % LiI and 7.5 % Graphene**

Li$_2$S, LiI, and graphene were mixed by a mixer in a weight ratio of 30:20:7.5. The resulting mixture was utilized as a cathode active material as is.

**Comparative Example 6: 30 % Li$_2$S - 20 % LiI - 7.5 % CNF + 42.5% SE**

The same process as Example 2 was conducted except that CNF was utilized instead of graphene.

**Comparative Example 7: 30 % Li$_2$S - 30 % Graphene**

Li$_2$S and graphene were mixed in a weight ratio of 70:30. For the graphene, the same graphene as utilized in Example 1 was utilized.
The resulting mixture was mechanically milled utilizing a ball mill, to produce a Li$_2$S-graphene composite. The milling conditions were for 10 hours at 25 °C, 600 rpm. The milling energy applied to a sample during milling was 20 G. The Li$_2$S-graphene composite was utilized as a composite cathode active material.

**Comparative Example 8: 30 % Li$_2$S - 20 % LiI - 7.5 % Graphene**

Li$_2$S and LiI were mixed in a weight ratio of 30:20. The resulting mixture was mechanically milled utilizing a ball mill, to produce a Li$_2$S-LiI composite. The milling conditions were for 10 hours at 25 °C, 600 rpm.
The Li$_2$S-LiI composite and graphene were simply mixed together to obtain a mixture of the Li$_2$S-LiI composite and the graphene.

**Preparation of Cathode and Secondary Battery**

**Example 8**

**Preparation of Cathode**

As a cathode active material, the Li$_2$S-LiI-graphene composite prepared in Example 1 was prepared. As a solid electrolyte, argyrodite-type or kind Li$_6$PS$_5$Cl crystals (D50=3.0 $\mu$m, crystalline) were prepared. PTFE was prepared as a binder. These components in a weight ratio of composite cathode active material : solid electrolyte : binder = 60 : 40 : 1.2 were physically mixed in a mortar and pestle to prepare a cathode mixture. The cathode mixture was obtained by dry mixing, utilizing a ball mill.
The cathode mixture was placed on one side of a cathode current collector made of an aluminum foil carbon-coated on one side thereof, and was plate-pressed for 10 minutes with a pressure of 200 MPa to produce a cathode. The thickness (average thickness) of the cathode was about 120 $\mu$m. The thickness (average thickness) of the cathode active material layer was about 100 $\mu$m, and the thickness (average thickness) of the carbon-coated aluminum foil was about 20 $\mu$m. The cathode active material layer and the cathode current collector had the same surface area.

**Preparation of Anode**

As an anode current collector, a 10 $\mu$m-thick SUS sheet was prepared. As an anode active materials, carbon black (CB) having a primary particle diameter of about 30 nm and silver (Ag) particles having an average particle diameter of about 60 nm were prepared.
In a vessel containing 4 grams of mixed powder containing CB and Ag particles in a weight ratio of 3:1, 4 grams of an NMP solution containing 7 wt% of PVDF binder (#9300, KUREHA) were added to prepare a mixed solution. The prepared mixed solution was stirred while slowly adding NMP to this mixed solution, to produce a slurry. The prepared slurry was applied to the SUS sheet by a bar coater, and dried in open air at 80 °C for 10 minutes, and then vacuum-dried at 40 °C for 10 hours to prepare a laminate. The prepared laminate was cold roll-pressed to flatten the surface thereof, to prepare an anode having the first anode active material layer/anode current collector structure. The thickness of the anode active material layer was about 15 $\mu$m. The first anode active material layer and the anode current collector had the same surface area.

**Preparation of Solid Electrolyte Layer**

As a solid electrolyte, argyrodite-type or kind crystal Li$_6$PS$_5$Cl solid electrolyte (D$_{50}$=3.0 $\mu$m, crystalline) was

utilized, and 1.5 parts by weight of an acryl-based binder was added to 98.5 parts by weight of the solid electrolyte to prepare a mixture. The prepared mixture was stirred while adding octyl acetate thereto, to prepare a slurry. The prepared slurry was applied onto a 15-$\mu$m thick nonwoven fabric placed on a 75 $\mu$m-thick PET substrate by utilizing a bar coater, and dried in open air at a temperature of 80 °C for 10 minutes to prepare a laminate. The prepared laminate was vacuum-dried at a temperature of 80 °C for 2 hours to prepare a solid electrolyte layer.

**Inactive Member**

A slurry obtained by mixing cellulose fibers, glass fibers, aluminum hydroxide (Al(OH)$_3$), an acryl-based binder, and a solvent was molded in the form of a gasket, and then the solvent was removed therefrom to produce a flame-retardant inactive member.

The weight ratio of pulp fibers (cellulose fibers) : glass fibers : aluminum hydroxide (Al(OH)$_3$): acryl-based binder was 20 : 8 : 70 : 2. The thickness (average thickness) of the inactive member was 120 $\mu$m.

Before placing the produced flame-retardant inactive member on the solid electrolyte layer, the flame-retardant inactive member was thermally treated under vacuum at 80 °C for 5 hours to remove moisture and/or the like therefrom.

**Preparation of Solid Secondary Battery**

As shown in FIG. 4, the solid electrolyte layer was provided on the anode layer such that the first anode active material layer was in contact with the solid electrolyte layer, and the cathode was provided on the solid electrolyte layer. A gasket may be provided around the cathode while around (e.g., surrounding) the cathode to thereby prepare a laminate. The thickness of the gasket was about 120 $\mu$m. The flame-retardant inactive member was utilized as the gasket. The gasket was provided so as to be in contact with a side surface of the cathode, and the sel. The cathode was provided in the center portion of the solid electrolyte layer, and the gasket was placed extending to a terminal portion of the solid electrolyte layer, while around (e.g., surrounding) the cathode. The surface area of the cathode was about 90 % of the surface area of the solid electrolyte layer, and the gasket was provided in the entire remaining 10 % of the surface area of the solid electrolyte layer that does not have the cathode provided therein.

The prepared laminate was plate-pressed with a pressure of 500 Mpa at 85 °C for 30 minutes. As the solid electrolyte layer is sintered by such a press treatment, the battery performance may improve. The thickness (average thickness) of the sintered solid electrolyte layer was about 45 $\mu$m. The density of the argyrodite-type or kind crystal Li$_6$PS$_5$Cl solid electrolyte included in the sintered solid electrolyte layer was 1.6 g/cc. The surface area of the solid electrolyte layer was the same as the surface area of the anode.

The pressed laminate was placed in a pouch and vacuum-sealed to produce a solid secondary battery. A part of the cathode current collector and the anode current collector was extended out of the sealed battery and utilized as a cathode terminal and an anode terminal, respectively.

**Examples 9 to 16**

Cathodes and solid secondary batteries were prepared in substantially the same manner as Example 8, except that the composite cathode active materials prepared in Examples 2 to 7 were respectively utilized, and the amounts of solid electrolyte SE were utilized as shown in Table 2 if (e.g., when) preparing the cathode mixtures.

**Comparative Examples 9 to 16**

Cathodes and solid secondary batteries were prepared in substantially the same manner as Example 8, except that the composite cathode active materials prepared in Comparative Examples 2 to 8 were respectively utilized.

**Example 17: Sulfide-Based Cathode Active Material (Li$_2$S-C Composite), First Anode Active Material Layer (Ag-supported Carbon), utilizing First and Second Flame-Retardant Inactive Members**

**Preparation of Anode Layer**

As an anode current collector, a 10 $\mu$m-thick SUS sheet was prepared. Further, as anode active materials, carbon black (CB) having a primary particle diameter of about 30 nm and silver (Ag) particles having an average particle diameter of about 60 nm were prepared.

In a vessel containing 4 grams of mixed powder containing CB and Ag particles in a weight ratio of 3:1, 4 grams of an NMP solution containing 7 wt% of PVDF binder (#9300, KUREHA) were added to prepare a mixed solution. Then, the mixed solution was stirred while slowly adding NMP to this mixed solution, to produce a slurry. The prepared slurry was applied to the SUS sheet by a bar coater, and then dried in open air at 80 °C for 10 minutes. The laminate thus obtained was vacuum-dried at 40 °C for 10 hours. The dried laminate was cold roll-pressed with a pressure of 5 ton·f/cm$^2$ and at a rate of 5 m/sec to flatten the surface of a first anode active material layer of the laminate. Through the described process, an anode layer was prepared. The thickness of the first anode active material layer included in the anode layer was about 15 $\mu$m. The first anode active material layer and the anode current collector had the same surface area.

## Preparation of Cathode Layer

As a cathode active material, the composite cathode active material prepared in Example 1 was prepared.

As a solid electrolyte, argyrodite-type or kind Li$_6$PS$_5$Cl crystals (D50=3.0 $\mu$m, crystalline) were prepared. As a conductive material, Ketjen black was prepared. The described components were mixed in a weight ratio of cathode active material : solid electrolyte : conductive material = 40 : 50 : 10, to prepare a cathode mixture. The cathode mixture was obtained by dry mixing, utilizing a ball mill. The cathode mixture obtained by ball-milling formed an ionically conductive and electronically conductive network.

The cathode mixture was placed on one side of a cathode current collector made of SUS or an aluminum foil carbon-coated on one side thereof, and was plate-pressed for 10 minutes with a pressure of 200 MPa to produce a cathode layer. The thickness of the cathode layer was about 120 $\mu$m. The thickness of the cathode active material layer was about 100 $\mu$m, and the thickness of the carbon-coated aluminum foil was about 20 $\mu$m.

## Preparation of Solid Electrolyte Layer

As a solid electrolyte, argyrodite-type or kind crystal Li$_6$PS$_5$Cl solid electrolyte (D$_{50}$=3.0 $\mu$m, crystalline) was utilized, and 1.5 parts by weight of an acryl-based binder was added to 98.5 parts by weight of the solid electrolyte to prepare a mixture. The prepared mixture was stirred while adding octyl acetate thereto, to prepare a slurry. The prepared slurry was applied onto a 15-mm thick nonwoven fabric placed on a 75 mm-thick PET substrate by utilizing a bar coater, and dried in open air at a temperature of 80 °C for 10 minutes to obtain a laminate. The obtained laminate was vacuum-dried at a temperature of 80 °C for 2 hours. Through the described process, a solid electrolyte layer was produced.

## Flame-Retardant Inactive Member

A slurry obtained by mixing pulp fibers (cellulose fibers), glass fibers, aluminum hydroxide (Al(OH)$_3$), titanium dioxide (TiO$_2$), an acryl-based binder, and a solvent was molded into the shape of a gasket, and by removing the solvent therefrom, a flame-retardant inactive member was produced.

The weight ratio of pulp fibers (cellulose fibers) : glass fibers : aluminum hydroxide (Al(OH)$_3$) : titanium dioxide (TiO$_2$) : acryl-based binder was 20 : 8 : 60 : 10 : 2. The thickness of the inactive member was 120 $\mu$m.

Before placing the produced flame-retardant inactive member on the solid electrolyte layer, the flame-retardant inactive member was thermally treated under vacuum at 80 °C for 5 hours to remove moisture and/or the like therefrom.

## Preparation of Solid Secondary Battery

As shown in FIG. 4, the solid electrolyte layer was provided on the anode layer such that the first anode active material layer was in contact with the solid electrolyte layer, and the cathode layer was provided on the solid electrolyte layer. A first gasket was provided around the anode layer such that the first gasket was in contact with the solid electrolyte layer while being around (e.g., surrounding) the anode layer to thereby prepare a laminate. The thickness of the first gasket was about 120 $\mu$m. The flame-retardant inactive member (first inactive member) was utilized as the first gasket. The anode layer was provided in the center portion of the solid electrolyte layer, and the first gasket was placed extending to a terminal portion of the solid electrolyte layer, while being around (e.g., surrounding) the anode layer. The surface area of the anode layer was about 90 % of the surface area of the solid electrolyte layer, and the first gasket was provided in the entire remaining 10 % of the surface area of the solid electrolyte layer that does not have the anode layer provided therein.

A second gasket was provided around the cathode layer such that the second gasket is in contact with the solid electrolyte layer while being around (e.g., surrounding) the cathode layer to thereby prepare a laminate. The thickness of the second gasket was about 120 $\mu$m. The flame-retardant inactive member (second inactive member) was utilized as the second gasket. The cathode layer was provided in the center portion of the solid electrolyte layer, and the second gasket was placed extending to a terminal portion of the solid electrolyte layer, while being around (e.g., surrounding) the cathode layer. The surface area of the cathode layer was about 80 % of the surface area of the solid electrolyte layer, and the second gasket was provided in the entire remaining 20 % of the surface area of the solid electrolyte layer that does not have the cathode layer provided therein.

The prepared laminate was plate-pressed with a pressure of 500 Mpa at 85 °C for 30 minutes. Such a press treatment may sinter the solid electrolyte layer and improve battery performance. The thickness of the sintered solid electrolyte layer was about 45 $\mu$m.

The pressed laminate was placed in a pouch and vacuum-sealed to produce a solid secondary battery. A part of the cathode current collector and a part of the anode current collector were extended out of the sealed battery and utilized as a cathode layer terminal and an anode layer terminal, respectively.

**Example 18: Mono-Cell Solid Secondary Battery, Sulfide-Based Cathode Active Material (Li$_2$S-C-Solid Electrolyte Composite), Using Lithium Host Layer, Using First and Second Flame-Retardant Inactive Members**

**Preparation of Anode Layer**

As an anode current collector, a 10 $\mu$m-thick SUS sheet was prepared. Further, a carbonized cotton sheet was prepared as a lithium host. The carbonized cotton sheet was prepared according to the methods disclosed in Joule 2017, 1, 563.

The prepared carbonized cotton sheet was placed on the SUS sheet to prepare a laminate. The prepared laminate was vacuum-dried at a temperature of 40 °C for 10 hours. The dried laminate was cold roll-pressed with a pressure of 5 ton·f/cm$^2$ and at a rate of 5 m/sec to flatten the surface of a first anode active material layer of the laminate. Through the described process, an anode layer was prepared. The thickness (average thickness) of the carbonized cotton sheet included in the anode layer, for example, lithium host layer, was about 120 $\mu$m.

**Preparation of Cathode Layer**

As a cathode active material, the composite cathode active material in Example 1 was prepared.

As a solid electrolyte, argyrodite-type or kind Li$_6$PS$_5$Cl crystals (D50=3.0 $\mu$m, crystalline) were prepared. As a conductive material, Ketjen black was prepared. The described components were mixed in a weight ratio of cathode active material : solid electrolyte : conductive material = 40 : 50 : 10, to prepare a cathode mixture. The cathode mixture was obtained by dry mixing, utilizing a ball mill. The cathode mixture obtained by ball-milling formed ionically conductive and electronically conductive networks.

The cathode mixture was placed on one side of a cathode current collector made of SUS (stainless steel) or an aluminum foil carbon-coated on one side thereof, and was plate-pressed for 10 minutes with a pressure of 200 MPa to produce a cathode layer. The thickness (average thickness) of the cathode layer was about 120 $\mu$m. The thickness (average thickness) of the cathode active material layer was about 100 $\mu$m, and the thickness (average thickness) of the carbon-coated aluminum foil was about 20 $\mu$m.

**Preparation of Solid Electrolyte Layer**

As a solid electrolyte, argyrodite-type or kind crystal Li$_6$PS$_5$Cl solid electrolyte (D$_{50}$=3.0 $\mu$m, crystalline) was utilized, and 1.5 parts by weight of an acryl-based binder was added to 98.5 parts by weight of the solid electrolyte to prepare a mixture. The prepared mixture was stirred while adding octyl acetate thereto, to prepare a slurry. The prepared slurry was applied onto a 15-$\mu$m thick nonwoven fabric placed on a 75 $\mu$m-thick PET substrate by utilizing a bar coater, and dried in open air at a temperature of 80 °C for 10 minutes to obtain a laminate. The obtained laminate was vacuum-dried at a temperature of 80 °C for 2 hours. Through the described process, a solid electrolyte layer was prepared.

**Flame-Retardant Inactive Member**

A slurry obtained by mixing cellulose fibers, glass fibers, aluminum hydroxide (Al(OH)$_3$), titanium dioxide (TiO$_2$), an acryl-based binder, and a solvent was molded into the shape of a gasket, and by removing the solvent therefrom, a flame-retardant inactive member was produced.

The weight ratio of cellulose fibers : glass fibers : aluminum hydroxide (Al(OH)$_3$) : titanium dioxide (TiO$_2$) : acryl-based binder was 20 : 8 : 60 : 10 : 2. The thickness (average thickness) of the inactive member was 120 $\mu$m.

Before placing the produced flame-retardant inactive member on the solid electrolyte layer, the flame-retardant inactive member was thermally treated under vacuum at 80 °C for 5 hours to remove moisture and/or the like therefrom.

**Preparation of Solid Secondary Battery**

As shown in FIG. 5, the solid electrolyte layer was provided on the anode layer such that the lithium host layer was in contact with the solid electrolyte layer, and the cathode layer was provided on the solid electrolyte layer. A first gasket was provided around the anode layer such that the first gasket was in contact with the solid electrolyte layer while around (e.g., surrounding) the anode layer to thereby prepare a laminate. The thickness of the first gasket was about 120 $\mu$m. The flame-retardant inactive member (first flame-retardant inactive member) was utilized as the first gasket. The anode layer was provided in the center portion of the solid electrolyte layer, and the first gasket was placed extending to a terminal portion of the solid electrolyte layer, while around (e.g., surrounding) the anode layer. The surface area of the anode layer was about 90 % of the surface area of the solid electrolyte layer, and the first gasket was provided in the entire remaining 10 % of the surface area of the solid electrolyte layer that does not have the anode layer provided therein.

A second gasket was provided around the cathode layer such that the second gasket is in contact with the solid electrolyte layer while around (e.g., surrounding) the cathode layer to thereby prepare a laminate. The thickness of the second gasket was about 120 $\mu$m. The flame-retardant inactive member (second flame-retardant inactive member) was utilized as the second gasket. The cathode layer was provided in the center portion of the solid electrolyte layer, and the second gasket was placed extending to a terminal portion of the solid electrolyte layer, while around (e.g., surrounding) the cathode layer. The surface area of the cathode layer was about 90% of the surface area of the solid electrolyte layer, and the second gasket was provided in the entire remaining 10% of the surface area of the solid electrolyte layer that does not have the cathode layer provided therein.

The prepared laminate was plate-pressed with a pressure of 500 Mpa at 85 °C for 30 minutes. Such a press treatment may sinter the solid electrolyte layer and improve battery performance. The thickness (average thickness) of the sintered solid electrolyte layer was about 45 $\mu$m. The density of the argyrodite-type or kind crystal $Li_6PS_5Cl$ solid electrolyte included in the sintered solid electrolyte layer was 1.6 g/cc.

The pressed laminate was placed in a pouch and vacuum-sealed to produce a solid secondary battery. A part of the cathode current collector and a aprt of the anode current collector were extended out of the sealed battery and utilized as a cathode layer terminal and an anode layer terminal, respectively.

## Comparative Example 17: Sulfide-Based Cathode Active Material ($Li_2S$-C-Solid Electrolyte Composite), Free of Lithium Host Layer, Free of Flame-Retardant First and Second Inactive Members

A solid secondary battery was prepared following the same method as Example 18, except that the second flame-retardant inactive member (second gasket) was not utilized on the cathode layer, the anode layer only utilized the anode current collector, and the lithium host layer and the first flame-retardant inactive member (first gasket) were not utilized.

## Comparative Example 18: Sulfide-based Cathode Active Material ($Li_2S$-C-Solid Electrolyte Composite), Free of Lithium Host Layer, Free of Flame-Retardant First Inactive Member

A solid secondary battery was prepared following the same method as Example 18, except that the second flame-retardant inactive member (second gasket) was utilized on the cathode layer, the anode layer only utilized the anode current collector, and the lithium host layer and the first flame-retardant inactive member (first gasket) were not utilized.

## Evaluation Example 1: XRD and Scanning Electron Microscopy Analysis

XRD spectra were measured utilizing Cu K$\alpha$ radiation for the composite cathode active materials (i.e., composites) prepared in Example 1 and Comparative Examples 2 to 5. From the measured XRD spectra, $Li_2S$ crystallite sizes calculated from the first peaks appearing at a diffraction angle $2\theta = 27° \pm 2.0°$, corresponding to the (111) plane, are shown in Table 1. The crystal size was measured utilizing Sherrer Equation.

Using a particle size analyzer (PSA) and a scanning electron microscope utilizing a laser, the particle diameter (average particle diameter)(D50) of $Li_2S$ in the composite cathode active materials prepared in Example 1 and Comparative Examples 2 to 5 were measured. The particle diameter (D50) of $Li_2S$ in the composite cathode active material may be an arithmetic mean (e.g., average) value of particle diameters of a plurality of $Li_2S$ particles, as measured utilizing software from a scanning electron microscope image. The results of measurement are shown in Table 1.

Table 1

| Item | Milling in Step 1 | Milling in Step 2 | Solid solution formation | $Li_2S$ crystallite size [nm] | $Li_2S$ particle size [$\mu$m] |
|---|---|---|---|---|---|
| Example 1 (30 % $Li_2S$- 20 % LiI - 10 % Graphene + 40 % SE) | 600 rpm, 28 G, 10 hr | 600 rpm, 28 G, 10 hr | ○ | 9.9 | Less than 1 |

(continued)

| Item | Milling in Step 1 | Milling in Step 2 | Solid solution formation | Li$_2$S crystallite size [nm] | Li$_2$S particle size [$\mu$m] |
|---|---|---|---|---|---|
| Example 2 (30 % Li$_2$S - 20 % LiI - 7.5 % Graphene + 42.5 % SE) | 600 rpm, 28 G, 10 hr | 600 rpm, 28 G, 10 hr | ○ | 9.7 | Less than 1 |
| Example 3 (30 % Li$_2$S - 20 % LiI - 5 % Graphene + 45 % SE) | 600 rpm, 28 G, 10 hr | 600 rpm, 28 G, 10 hr | ○ | 10 | Less than 1 |
| Example 4 (32.5 % Li$_2$S - 20 % LiI - 7.5 % Graphene + 40 % SE) | 600 rpm, 28 G, 10 hr | 600 rpm, 28 G, 10 hr | ○ | 9.9 | Less than 1 |
| Example 5 (32.5 % Li$_2$S - 20 % LiI - 7.5 % Graphene (high-BET) + 40 % SE) | 600 rpm, 28 G, 10 hr | 600 rpm, 28 G, 10 hr | ○ | 11 | Less than 1 |
| Example 6 (32.5 % Li$_2$S - 20 % LiI - 7.5 % Graphene (N-doped) + 40 % SE) | 600 rpm, 28 G, 10 hr | 600 rpm, 28 G, 10 hr | ○ | 10.2 | Less than 1 |
| Example 7 (32.5 % Li$_2$S - 20 % LiI - 7.5 % Graphene (F-doped) + 40 % SE) | 600 rpm, 28 G, 10 hr | 600 rpm, 28 G, 10 hr | ○ | 10.1 | Less than 1 |
| Comparative Example 1 (30 % Li$_2$S - 20 % LiI - 10 % CNF + 40 % SE) | 600 rpm, 28 G, 10 hr | 600 rpm, 28 G, 10 hr | ○ | 9.8 | Less than 1 |
| Comparative Example 2 (30 % Li$_2$S + 30 % Graphene) | Simple blend | - | X | 64.2 | 8 |
| Comparative Example 3 (30 % Li$_2$S - 7.5 % Graphene - 20 % LiI) | 600 rpm, 28 G, 10 hr | 600 rpm, 28 G, 10 hr | X | 17.1 | 3 |
| Comparative Example 4 (30 % Li$_2$S - 20 % SE - 7.5 % Graphene) | 600 rpm, 28 G, 10 hr | 600 rpm, 28 G, 10 hr | X | 12.2 | 2 |
| Comparative Example 5 (30 % Li$_2$S + 20 % LiI + 7.5 % Graphene) (Li$_2$S+LiI+Graphene simple mixture) | Simple blend | - | X | 64.4 | 8 |
| Comparative Example 6 (vs. Example 2) (30 % Li$_2$S - 20 % LiI - 7.5 % CNF + 42.5 % SE) | 600 rpm, 28 G, 10 hr | 600 rpm, 28 G, 10 hr | ○ | 9.9 | Less than 1 |
| Comparative Example 7 (30 % Li$_2$S - 30 % Graphene) | 600 rpm, 28 G, 10 hr | - | X | 10.3 | Less than 1 |
| Comparative Example 8 (30 % Li$_2$S - 20 % LiI + 7.5 % Graphene) (Graphene, simple mixing) | 600 rpm, 28 G, 10 hr | - | ○ | 10.0 | Less than 1 |

In Table 1, "SE" indicates the solid electrolytes utilized to prepare the cathode mixtures. "X" indicates a solid solution failed to form. As shown in Table 1, the Li$_2$S-LiI-graphene composite of Example 1 included a Li$_2$S-LiI solid solution, the size of a Li$_2$S crystallite was less than 9.9 nm, and the particle size of Li$_2$S in the composite was 1 $\mu$m or less.

As shown in Table 1, it was found that the simple mixture of Li$_2$S, LiI, and graphene of Comparative Example 5 failed to form a solid solution.

It was also found that the simple mixture of Li$_2$S and graphene of Comparative Example 2, the Li$_2$S-graphene-LiI

composite of Comparative Example 3, and the $Li_2S$-SE-graphene composite of Comparative Example 4 failed to form solid solution. In some embodiments, the $Li_2S$-graphene-LiI composite of Comparative Example 3 failed to form a solid solution properly as the $Li_2S$-graphene-LiI composite was prepared in Step 2 after preparing the $Li_2S$-graphene composite in Step 1.

**Evaluation Example 2: XRD Analysis**

XRD spectra were measured utilizing Cu K$\alpha$ radiation for the composite of Example 1 and the simple mixtures of $Li_2S$, LiI, and graphene of Comparative Example 5.. On the XRD spectra, the presence of peaks that appear at diffraction angle 2θ = 25° $\pm$ 2.0°, corresponding to the (002) plane, was investigated.

As a result, the peaks corresponding to the (002) plane that appear at diffraction angle 2θ = 25° $\pm$ 2.0° of the composite of Example 1 were shown to have reduced intensity and increased full width at half maximum.

**Evaluation Example 3**: **Charge/Discharge Test**

The following charge/discharge test was performed to evaluate the cycling performance of the solid secondary batteries of Examples 8 to 16, and Comparative Examples 9 to 16, which employ the composite cathode active materials prepared in Examples 1 to 7 and Comparative Examples 1 to 8, respectively.

The charge/discharge test was performed while the solid secondary battery was placed in a constant-temperature bath at 45 °C.

In the first cycle, each battery was charged at a constant current of 0.1 C for 12.5 hours until the battery voltage reached a voltage of 2.5 V to 2.8 V. Then, the battery was discharged at a constant current of 0.1 C for 12.5 hours until the battery voltage reached 0.3 V.

The discharge capacity in the first cycle was utilized as a standard capacity. The standard capacity was expressed as specific capacity of $Li_2S$ in Table 1.

After the second cycle, charge and discharge were performed up to 150 cycles under the same conditions as the first cycle. The results of measurement are shown in Table 2. Initial efficiency is represented by Equation 1.

Initial Efficiency [%] = [Discharge Capacity in 1st Cycle / Charge Capacity in 1st Cycle] $\times$ 100          Equation 1

Cycle number refers to the number of cycles required for the discharge capacity to decrease to 80 % of the standard capacity after the second cycle. The higher the cycle number, the better lifespan characteristics the battery is considered to have.

Table 2

| Item | | Cathode active material | Specific capacity (mAh/g) | Electrode density (g/cm$^3$) | Electrode capacity (mAh/g) | Initial efficiency [%] | Lifespan (SOH80@) |
|---|---|---|---|---|---|---|---|
| Example 8 | | Example 1 (30 % $Li_2S$ - 20 % LiI - 10 % Graphene + 40 % SE) | 450 | 1.38 | 135 | 43.7 | 280 |
| Example 9 | | Example 2 (30 % $Li_2S$ - 20 % LiI - 7.5 % Graphene + 42.5 % SE) | 1002 | 1.45 | 300.6 | 81.5 | 285 |
| Example 10 | | Example 3 (30 % $Li_2S$ - 20 % LiI - 5 % Graphene + 45 % SE) | 674 | 1.55 | 202.2 | 48.5 | 250 |
| Example 11 | | Example 4 (32.5 % $Li_2S$ - 20 % LiI - 7.5 % Graphene + 40 % SE) | 1005 | 1.44 | 326.6 | 85 | 300 |
| Example 12 | | Example 5 (32.5 % $Li_2S$ - 20 % LiI - 7.5 % Graphene (high-BET) + 40 % SE) | 900 | 1.2 | 270 | 70 | 250 |

(continued)

| Item | | Cathode active material | Specific capacity (mAh/g) | Electrode density (g/cm$^3$) | Electrode capacity (mAh/g) | Initial efficiency [%] | Lifespan (SOH80@) |
|---|---|---|---|---|---|---|---|
| Example 13 | | Example 6 (32.5 % Li$_2$S - 20 % LiI - 7.5 % Graphene (N-doped) + 40 % SE) | 1125 | 1.44 | 365.6 | 84 | 330 |
| Example 14 | | Example 7 (32.5 % Li$_2$S - 20 % LiI - 7.5 % Graphene (F-doped) + 40 % SE) | 985 | 1.44 | 320.1 | 88 | 328 |
| Comparative Example 9 | | Comparative Example 1 (30 % Li$_2$S - 20 % LiI -10 % CNF + 40 % SE) | 900 | 1.926 | 270 | 81 | 100 |
| Comparative Example 10 | | Comparative Example 2 (30 % Li$_2$S + 30 % Graphene) | 400 | 1.762 | 120 | 30 | 10 |
| Comparative Example 11 | | Comparative Example 3 (30 % Li$_2$S - 7.5 % Graphene - 20 % LiI) | 300 | 1.906 | 90 | 80 | 50 |
| Comparative Example 12 | | Comparative Example 4 (30 % Li$_2$S - 20 % SE - 7.5 % Graphene) | 10 | 1.674 | 3 | - | - |
| Comparative Example 13 | | Comparative Example 5 (30 % Li$_2$S + 20 % LiI + 7.5% Graphene) (Li$_2$S+LiI+Graphene simple mixing) | 40 | 1.906 | 12 | - | - |
| Comparative Example 14 | | Comparative Example 6 (vs. Example 2) (30 % Li$_2$S - 20 % LiI - 7.5 % CNF + 42.5 % SE) | 850 | 1.912 | 255 | 78 | 60 |
| Comparative Example 15 | | Comparative Example 7 (30 % Li$_2$S - 30 % Graphene) | 400 | 1.762 | 1.76 | 30 | 10 |
| Comparative Example 16 | | Comparative Example 8 (30 % Li$_2$S - 20 % LiI + 7.5 % Graphene) (Graphene simple mixture) | 60 | 1.906 | 18 | - | - |

In Table 2, "-" indicates no measurable data available.

As shown in Table 2, the solid secondary batteries of Examples 8 to 14 were found to show improved discharge capacity, initial efficiency and lifespan characteristics, compared to the solid secondary batteries of Comparative Examples 9 to 16.

The solid secondary batteries of Comparative Examples 11 to 13, respectively employing the composite cathode active materials with increased crystallite sizes of Comparative Examples 3 to 5, were found to have deteriorated discharge capacity and lifespan characteristics.

The solid secondary batteries of Comparative Examples 14 and 15 were found to have deteriorated initial efficiency and lifespan, compared to the solid secondary battery of Example 8. Compared to the solid secondary battery of Example 8, the solid secondary battery of Comparative Example 16, utilizing the cathode active material containing the graphene simple mixture of Comparative Example 8, was found to show extremely poor performance in initial efficiency and lifespan that there were no measurable data available.

**Evaluation Example 4: High-Temperature Lifespan Test**

Charge-discharge characteristics of the solid secondary battery prepared in Example 17 were evaluated by the following charge-discharge test. The charge-discharge test was performed while the solid secondary battery was placed in a constant-temperature bath at 45 °C.

In the first cycle, each battery was charged at a constant current of 0.3 mA/cm$^2$ for 12.5 hours until the battery voltage reached a voltage of 2.5 V to 2.8 V. Then, the battery was discharged at a constant current of 0.3 mA/cm$^2$ for 12.5 hours until the battery voltage reached 0.5 V.

The discharge capacity in the first cycle was utilized as a standard capacity. After the second cycle, charging and discharging were performed up to 200 cycles under the same conditions as the first cycle. The results of the measurement are shown in Table 1.

The higher the number of cycles required for discharge capacity to reduce to 95 % of the standard capacity after the second cycle, the better lifespan characteristics the battery is considered to have.

Because a short-circuit occurred in the solid secondary battery of Comparative Example 1 before completion of the first cycle, no data for lifespan characteristics were available for measurement.

Table 3

| Item | Cycle number [cycles] |
|---|---|
| Example 17 (Mono-Cell/Composite Cathode Active Material/Flame-Retardant Cathode Gasket/Carbonized Cotton Sheet/Flame-Retardant Anode Gasket) | 172 |
| Comparative Example 17 (Mono-Cell/Li$_2$S-C-Solid Electrolyte Composite) | Unavailable for measurement |

As shown in Table 3, the solid secondary battery of Example 17 has improved lifespan characteristics compared to the solid secondary battery of Comparative Example 17.

Compared to the solid secondary battery of Comparative Example 17 that does not contain lithium hosts, the solid secondary battery of Example 17 including the lithium hosts shows improved lifespan characteristics, which is considered to be due to suppressed or reduced or reduced growth of lithium dendrites, suppressed or reduced occurrence of a short-circuit, and suppressed or reduced volume changes of the anode layers.

In some embodiments, it was found that in the solid secondary batteries of Examples 8 to 14, a lithium metal layer was formed as the second anode active material layer was formed between the first anode active material layer and the anode current collector after the initial charging. This result was confirmed through cross-sectional SEM images of the solid secondary batteries.

According to one aspect, a solid secondary battery may be provided, which has improved initial efficiency, energy density, and lifespan characteristics by including a cathode with an improved electronic conduction network.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the scope of the present disclosure as defined by the following claims.

**Claims**

1. A solid secondary battery (1) comprising:

   a cathode layer (10);
   an anode layer (20); and
   a solid electrolyte layer (30) between the cathode layer (10) and the anode layer (20),
   wherein the cathode layer (10) comprises a cathode current collector (11) and a cathode active material layer (12) on at least one side of the cathode current collector (11),
   wherein the cathode active material layer (12) comprises a composite cathode active material,
   wherein the composite cathode active material comprises a composite of $M_2S$, an alkali metal salt, and a two-dimensional carbonaceous structure,
   wherein M is an alkali metal, the alkali metal being Li or Na, and the two-dimensional carbonaceous structure comprises graphene, graphene oxide, reduced graphene oxide, or a combination thereof, and
   wherein the composite comprises a solid solution of the $M_2S$ and the alkali metal salt
   wherein the alkali metal salt is a lithium salt or a sodium salt, and the alkali metal salt is a binary compound or a ternary compound,
   wherein the binary compound comprises Lil, LiBr, LiCl, LiF, LiH, $Li_2O$, $Li_2Se$, $Li_2Te$, $Li_3N$, $Li_3P$, $Li_3As$, $Li_3Sb$, $Li_3Al_2$, $LiB_3$ or a combination thereof, or comprises Nal, NaBr, NaCl, NaF, $Na_2O$, $Na_2Se$, $Na_3N$, $Na_3P$, $Na_3As$, $Na_3Sb$, $Na_3Al_2$, $NaB_3$, or a combination thereof, and
   wherein the ternary compound comprises $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, or a combination thereof, or comprises $Na_3OCl$, $NaBF_4$, $NaPF_6$, $NaAsF_6$, $NaClO_4$, $NaNO_3$, $NaAlO_2$, $NaAlCl_4$, $NaNO_3$, $Na_2CO_3$, $NaBH_4$, $Na_2SO_4$, $Na_3BO_3$, $Na_3PO_4$, $Na_4NCl$, $Na_5NCl_2$, $Na_3BN_2$, or a combination thereof.
   And /or
   wherein
   a molar ratio of the $M_2S$ to the alkali metal salt in the composite is about 50 : 50 to about 95 : 5, and
   an amount of the two-dimensional carbonaceous structure is about 1 part by weight to about 30 parts by weight, with respect to 100 parts by weight of the composite.

2. The solid secondary battery (1) as claimed in claim 1,

   wherein the two-dimensional carbonaceous structure is a two-dimensional carbonaceous structure doped with a dopant, and
   wherein the dopant is an n-type dopant or a p-type dopant, and the dopant comprises nitrogen (N), phosphorus (P), boron (B), sulfur (S), fluorine (F), chlorine (Cl), bromine (Br), germanium (Ge), gallium (Ga), or a combination thereof; and /or
   wherein an amount of the two-dimensional carbonaceous structure is about 0.1 parts by weight to about 20 parts by weight, with respect to 100 parts by weight of a total weight of the cathode active material layer (12), and
   wherein the two-dimensional carbonaceous structure has a specific surface area of about 1 square meter per gram ($m^2$/g) to about 50 $m^2$/g, a diameter of about 1 micrometer ($\mu$m) to about 50 $\mu$m, and a thickness of about 100 nanometer (nm) to about 10 $\mu$m, wherein the diameter is measured from a scanning electron microscope image and the specific surface area is measured by BET-adsorption.

3. The solid secondary battery (1) as claimed in claim 1 or 2,
   wherein

   an intensity derived from a first peak appearing at a diffraction angle of $2\theta = 18° \pm 2.0°$ on an XRD spectrum of the composite cathode active material is smaller than an intensity derived from a second peak appearing at a diffraction angle of $2\theta = 18° \pm 2.0°$ on an XRD spectrum of the two-dimensional carbonaceous structure utilized to prepare the composite,
   wherein
   the first peak has a first full width at half maximum (FWHM1) and the second peak has a second full width at half maximum (FWHM2), and
   wherein
   FWHM1 is greater than FWHM2, and
   FWHM1 is 1° or more.

4. The solid secondary battery (1) as claimed in any of the claims 1 to 3,

> wherein the cathode active material layer (12) further comprises a solid electrolyte, and
> wherein the solid electrolyte comprises a sulfide-based solid electrolyte, an oxide-based solid electrolyte, a polymer solid electrolyte, or a combination thereof, and
> wherein an amount of the solid electrolyte is about 10 parts by weight to about 60 parts by weight, with respect to 100 parts by weight of the cathode active material layer (12).

5. The solid secondary battery (1) as claimed in any of the claims 1 to 4,
wherein the composite further comprises a carbonaceous material.

6. The solid secondary battery (1) as claimed in any of the claims 1 to 5,

> wherein the anode layer (20) comprises an anode current collector (21) and a first anode active material layer (22) on the anode current collector (21); and/or
> wherein the anode layer (20) comprises an anode current collector (21) and a lithium host layer (22) on one side of the anode current collector (21),
> wherein the lithium host layer (22) comprises a lithium host structure, wherein the lithium host structure comprises at least one lithium host, the at least one lithium host comprising a carbonaceous lithium host, a metal-based lithium host, a polymer-based lithium host, or a combination thereof, and
> wherein the solid secondary battery (1) further comprises a first inactive member (42) on the anode layer (20).

7. The solid secondary battery (1) as claimed in any of the claims 1 to 6,

> wherein an anode active material of the first anode active material layer (22) comprises at least one of a carbonaceous anode active material and a metal-based anode active material,
> wherein
> the carbonaceous anode active material comprises amorphous carbon, crystalline carbon, porous carbon, or a combination thereof, and
> the metal-based anode active material comprises gold (Au), platinum (Pt), palladium (Pd), silicon (Si), silver (Ag), aluminum (Al), bismuth (Bi), tin (Sn), zinc (Zn), or a combination thereof.
> and/or
> wherein an anode active material of the first anode active material layer (22) comprises a mixture of a metal-based anode active material and a carbonaceous material, a metal-based anode active material supported on a carbonaceous material, or a combination thereof.

8. The solid secondary battery (1) as claimed in any of the claims 1 to 7, further comprising a second anode active material layer (24) between the anode current collector (21) and the first anode active material layer (22), wherein

> the second anode active material layer (24) is a metal layer comprising lithium or a lithium alloy, and
> the second anode active material layer (24) is a plated layer, and
> wherein a thickness of the first anode active material layer (22) is greater than a thickness of the second anode active material layer (24).

9. The solid secondary battery (1) as claimed in any of the claims 1 to 8, further comprising an inactive member on at least one side of the cathode layer (10) or the anode layer (20).

10. The solid secondary battery (1) as claimed in any of the claims 1 to 9, wherein the solid secondary battery (1) comprises

> about 10 parts by weight to about 80 parts by weight of the $M_2S$,
> about 10 parts by weight to about 40 parts by weight of the alkali metal salt, and
> about 1 part by weight to about 20 parts by weight of the two-dimensional carbonaceous structure,
> with respect to 100 parts by weight of the composite.

11. The solid secondary battery (1) as claimed in any of the claims 1 to 10

wherein the solid electrolyte layer (30) comprises a solid electrolyte, a gel electrolyte, or a combination thereof, wherein the solid electrolyte comprises a sulfide-based solid electrolyte, an oxide-based solid electrolyte, a polymer solid electrolyte, or a combination thereof, wherein the gel electrolyte comprises a polymer gel electrolyte,

wherein the sulfide-based solid electrolyte is at least one selected from among:

$Li_2S$-$P_2S_5$;
$Li_2S$-$P_2S_5$-LiX, X being a halogen element;
$Li_2S$-$P_2S_5$-$Li_2O$;
$Li_2S$-$P_2S_5$-$Li_2O$-LiI;
$Li_2S$-$SiS_2$;
$Li_2S$-$SiS_2$-LiI;
$Li_2S$-$SiS_2$-LiBr;
$Li_2S$-$SiS_2$-LiCl;
$Li_2S$-$SiS_2$-$B_2S_3$-LiI;
$Li_2S$-$SiS_2$-$P_2S_5$-LiI;
$Li_2S$-$B_2S_3$;
$Li_2S$-$P_2S_5$-$Z_mS_n$, m and n being each a positive number, and Z being one selected from among Ge, Zn, and Ga;
$Li_2S$-$GeS_2$;
$Li_2S$-$SiS_2$-$Li_3PO_4$;
$Li_2S$-$SiS_2$-$Li_pMO_q$, p and q being each a positive number, and M being one selected from among P, Si, Ge, B, Al, Ga, and In;
$Li_{7-x}PS_{6-x}Cl_x$, 0<x<2; $Li_{7-x}PS_{6-x}Br_x$, 0<x<2; and
$Li_{7-x}PS_{6-x}I_x$, 0≤x≤2,
wherein the sulfide-based solid electrolyte comprises an argyrodite-type solid electrolyte,
wherein the argyrodite-type or kind solid electrolyte comprises at least one selected from among $Li_6PS_5Cl$, $Li_6PS_5Br$, and $Li_6PS_5I$, and
wherein the argyrodite-type or kind solid electrolyte has a density of about 1500 $kg/m^3$ (1.5 gram per cubic centimeter (g/cc)) to about 2000 $kg/m^3$ (2.0 g/cc).

12. The solid secondary battery (1) as claimed in any of the claims 1 to 11

wherein the anode layer (20) comprises an anode current collector (21),
wherein at least one of the cathode current collector (11) or the anode current collector (21) comprises a base film and a metal layer on at least one side of the base film, and
wherein the base film comprises a polymer, the polymer comprising polyethylene terephthalate (PET), polyethylene (PE), polypropylene (PP), polybutylene terephthalate (PBT), polyimide (PI), or a combination thereof, and
wherein the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

13. A method of preparing a solid secondary battery (1) as claimed in any of the claims 1 to 12, the method comprising:

milling a composition comprising $M_2S$, an alkali metal salt, and a two-dimensional carbonaceous structure;
adding thereto a two-dimensional carbon nanostructure to obtain a composite, and milling the composite;
preparing a cathode by utilizing a composition containing the composite that is mixed with a binder;
preparing an anode; and
applying an electrolyte between the cathode and the anode, to thereby produce the solid secondary battery (1) as claimed in claim 1,
wherein preferably a carbonaceous material is added to the composition in the milling the composition.

**Patentansprüche**

1. Festkörper-Sekundärbatterie (1), aufweisend:

eine Kathodenschicht (10);

eine Anodenschicht (20); und

eine Festelektrolytschicht (30) zwischen der Kathodenschicht (10) und der Anodenschicht (20),

wobei die Kathodenschicht (10) einen Kathodenstromkollektor (11) und eine aktive Kathodenmaterialschicht (12) auf mindestens einer Seite des Kathodenstromkollektors (11) aufweist,

wobei die aktive Kathodenmaterialschicht (12) ein aktives Verbundstoff-Kathodenmaterial aufweist,

wobei das aktive Verbundstoff-Kathodenmaterial einen Verbundstoff aus $M_2S$, einem Alkalimetallsalz und einer zweidimensionalen kohlenstoffhaltigen Struktur aufweist,

wobei M ein Alkalimetall ist, wobei das Alkalimetall Li oder Na ist, und die zweidimensionale kohlenstoffhaltige Struktur Graphen, Graphenoxid, reduziertes Graphenoxid oder eine Kombination davon aufweist, und

wobei der Verbundstoff eine feste Lösung aus dem $M_2S$ und dem Alkalimetallsalz aufweist,

wobei das Alkalimetallsalz ein Lithiumsalz oder ein Natriumsalz ist und das Alkalimetallsalz eine binäre Verbindung oder eine ternäre Verbindung ist,

wobei die binäre Verbindung Lil, LiBr, LiCl, LiF, LiH, $Li_2O$, $Li_2Se$, $Li_2Te$, $Li_3N$, $Li_3P$, $Li_3As$, $Li_3Sb$, $Li_3Al_2$, $LiB_3$ oder eine Kombination davon aufweist, oder Nal, NaBr, NaCl, NaF, $Na_2O$, $Na_2Se$, $Na_3N$, $Na_3P$, $Na_3As$, $Na_3Sb$, $Na_3Al_2$, $NaB_3$ oder eine Kombination davon aufweist, und

die ternäre Verbindung $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$ oder eine Kombination davon aufweist oder $Na_3OCl$, $NaBF_4$, $NaPF_6$, $NaAsF_6$, $NaClO_4$, $NaNO_3$, $NaAlO_2$, $NaAlCl_4$, $NaNO_3$, $Na_2CO_3$, $NaBH_4$, $Na_2SO_4$, $Na_3BO_3$, $Na_3PO_4$, $Na_4NCl$, $Na_5Cl_2$, $Na_3BN_2$, oder eine Kombination davon aufweist, und/oder

wobei das Molverhältnis von $M_2S$ zum Alkalimetallsalz im Verbundstoff etwa 50:50 bis etwa 95:5 beträgt, und die Menge der zweidimensionalen kohlenstoffhaltigen Struktur etwa 1 Gewichtsteil bis etwa 30 Gewichtsteile, bezogen auf 100 Gewichtsteile des Verbundstoffs, beträgt.

2. Festkörper-Sekundärbatterie (1) nach Anspruch 1,

wobei die zweidimensionale kohlenstoffhaltige Struktur eine mit einem Dotierstoff dotierte zweidimensionale kohlenstoffhaltige Struktur ist, und

wobei der Dotierstoff ein n-Dotierstoff oder ein p-Dotierstoff ist und der Dotierstoff Stickstoff (N), Phosphor (P), Bor (B), Schwefel (S), Fluor (F), Chlor (Cl), Brom (Br), Germanium (Ge), Gallium (Ga) oder eine Kombination davon aufweist, und/oder

wobei die Menge der zweidimensionalen kohlenstoffhaltigen Struktur etwa 0,1 Gewichtsteile bis etwa 20 Gewichtsteile, bezogen auf 100 Gewichtsteile des Gesamtgewichts der aktiven Kathodenmaterialschicht (12), beträgt, und

wobei die zweidimensionale kohlenstoffhaltige Struktur eine spezifische Oberfläche von etwa 1 Quadratmeter pro Gramm ($m^2$/g) bis etwa 50 $m^2$/g, einen Durchmesser von etwa 1 Mikrometer ($\mu$m) bis etwa 50 $\mu$m und eine Dicke von etwa 100 Nanometer (nm) bis etwa 10 $\mu$m aufweist, wobei der Durchmesser von einem Rasterelektronenmikroskopbild gemessen wird und die spezifische Oberfläche durch BET-Adsorption gemessen wird.

3. Festkörper-Sekundärbatterie (1) nach Anspruch 1 oder 2, wobei

eine Intensität, die von einem ersten Peak hergeleitet wird, der bei einem Beugungswinkel von $2\theta = 18° \pm 2{,}0°$ auf einem XRD-Spektrum des aktiven Verbundstoff-Kathodenmaterials erscheint, kleiner ist als eine Intensität, die von einem zweiten Peak hergeleitet wird, der bei einem Beugungswinkel von $2\theta° = 18° \pm 2{,}0°$ auf einem XRD-Spektrum der zweidimensionalen kohlenstoffhaltigen Struktur erscheint, der zum Herstellen des Verbundmaterials verwendet wird, wobei

der erste Peak eine erste Halbwertsbreite (FWHM1) und der zweite Peak eine zweite Halbwertsbreite (FWHM2) aufweist, und wobei

FWHM1 größer ist als FWHM2, und

FWHM1 1° oder mehr beträgt.

4. Festkörper-Sekundärbatterie (1) nach einem der Ansprüche 1 bis 3,

wobei die aktive Kathodenmaterialschicht (12) ferner einen Festelektrolyten aufweist, und

wobei der Festelektrolyt einen Festelektrolyten auf Sulfidbasis, einen-Festelektrolyten auf Oxidbasis, einen Polymer-Festelektrolyten oder eine Kombination davon aufweist, und

wobei die Menge des Festelektrolyten etwa 10 Gewichtsteile bis etwa 60 Gewichtsteile, bezogen auf 100 Gewichtsteile der aktiven Kathodenmaterialschicht (12), beträgt.

5. Festkörper-Sekundärbatterie (1) nach einem der Ansprüche 1 bis 4, wobei der Verbundstoff ferner ein kohlenstoffhaltiges Material aufweist.

6. Festkörper-Sekundärbatterie (1) nach einem der Ansprüche 1 bis 5,

wobei die Anodenschicht (20) einen Anodenstromkollektor (21) und eine erste aktive Anodenmaterialschicht (22) auf dem Anodenstromkollektor (21) aufweist, und/oder
wobei die Anodenschicht (20) einen Anodenstromkollektor (21) und eine Lithium-Wirtsschicht (22) auf einer Seite des Anodenstromkollektors (21) aufweist,
wobei die Lithium-Wirtsschicht (22) eine Lithium-Wirtstruktur aufweist,
wobei die Lithium-Wirtsstruktur mindestens einen Lithium-Wirt aufweist, wobei der mindestens eine Lithium-Wirt einen kohlenstoffhaltigen Lithium-Wirt, einen Lithium-Wirt auf Metallbasis, einen Lithium-Wirt auf Polymerbasis oder eine Kombination davon aufweist, und
wobei die Festkörper-Sekundärbatterie (1) ferner ein erstes inaktives Element (42) auf der Anodenschicht (20) aufweist.

7. Festkörper-Sekundärbatterie (1) nach einem der Ansprüche 1 bis 6, wobei ein aktives Anodenmaterial der ersten aktiven Anodenmaterialschicht (22) mindestens ein Material unter einem kohlenstoffhaltigen aktiven Anodenmaterial und einem aktiven Anodenmaterial auf Metallbasis aufweist, wobei

das kohlenstoffhaltige aktive Anodenmaterial amorphen Kohlenstoff, kristallinen Kohlenstoff, porösen Kohlenstoff oder eine Kombination davon aufweist, und
das aktive Anodenmaterial auf Metallbasis Gold (Au), Platin (Pt), Palladium (Pd), Silizium (Si), Silber (Ag), Aluminium (Al), Wismut (Bi), Zinn (Sn), Zink (Zn) oder eine Kombination davon aufweist, und/oder wobei
ein aktives Anodenmaterial der ersten aktiven Anodenmaterialschicht (22) eine Mischung aus einem aktiven Anodenmaterial auf Metallbasis und einem kohlenstoffhaltigen Material, ein auf einem kohlenstoffhaltigen Material getragenes aktives Anodenmaterial auf Metallbasis oder eine Kombination davon aufweist.

8. Festkörper-Sekundärbatterie (1) nach einem der Ansprüche 1 bis 7, ferner aufweisend eine zweite aktive Anodenmaterialschicht (24) zwischen dem Anodenstromkollektor (21) und der ersten aktiven Anodenmaterialschicht (22), wobei

die zweite aktive Anodenmaterialschicht (24) eine Metallschicht ist, die Lithium oder eine Lithiumlegierung aufweist, und
die zweite aktive Anodenmaterialschicht (24) eine plattierte Schicht ist, und
wobei die Dicke der ersten aktiven Anodenmaterialschicht (22) größer ist als die Dicke der zweiten aktiven Anodenmaterialschicht (24).

9. Festkörper-Sekundärbatterie (1) nach einem der Ansprüche 1 bis 8, ferner aufweisend ein inaktives Element auf mindestens einer Seite der Kathodenschicht (10) oder der Anodenschicht (20).

10. Festkörper-Sekundärbatterie (1) nach einem der Ansprüche 1 bis 9, wobei die Festkörper-Sekundärbatterie (1) aufweist:

etwa 10 Gewichtsteile bis etwa 80 Gewichtsteile $M_2S$,
etwa 10 Gewichtsteile bis etwa 40 Gewichtsteile des Alkalimetallsalzes, und
etwa 1 Gewichtsteil bis etwa 20 Gewichtsteile der zweidimensionalen kohlenstoffhaltigen Struktur,
bezogen auf 100 Gewichtsteile des Verbundstoffs.

11. Festkörper-Sekundärbatterie (1) nach einem der Ansprüche 1 bis 10,

wobei die Festelektrolytschicht (30) einen Festelektrolyten, einen Gelelektrolyten oder eine Kombination davon aufweist,
wobei der Festelektrolyt einen Festelektrolyten auf Sulfidbasis, einen Festelektrolyten auf Oxidbasis, einen Polymer-Festelektrolyten oder eine Kombination davon aufweist,
wobei der Gelelektrolyt einen Polymer-Gelelektrolyten aufweist,
wobei der Festelektrolyt auf Sulfidbasis mindestens ein Elektrolyt ist, der ausgewählt ist aus:

$Li_2S-P_2S_5$,

$Li_2S-P_2S_5-LiX$, wobei X ein Halogenelement ist;

$Li_2S-P_2S_5-Li_2O$;

$Li_2S-P_2S_5-Li_2O-LiI$;

$Li_2S-SiS_2$;

$Li_2S-SiS_2-LiI$;

$Li_2S-SiS_2-LiBr$;

$Li_2S-SiS_2-LiCl$;

$Li_2S-SiS_2-B_2S_3-LiI$;

$Li_2S-SiS_2-P_2S_5-LiI$;

$Li_2S-B_2S_3$;

$Li_2S-P_2S_5-Z_mS_n$, wobei m und n jeweils eine positive Zahl sind und Z aus Ge, Zn und Ga ausgewählt ist;

$Li_2S-GeS_2$;

$Li_2S-SiS_2-Li_3PO_4$;

$Li_2S-SiS_2-Li_pMO_q$, wobei p und q jeweils eine positive Zahl sind und M aus P, Si, Ge, B, Al, Ga und In ausgewählt ist;

$Li_{7-x}PS_{6-x}Cl_x$, $0 < x < 2$; $Li_{7-x}PS_{6-x}Br_x$, $0 < x < 2$; und

$Li_{7-x}PS_{6-x}I_x$, $0 \leq x \leq 2$,

wobei der Festelektrolyt auf Sulfidbasis einen Festelektrolyten vom Argyrodit-Typ aufweist,

wobei der Festelektrolyt vom Argyrodit-Typ mindestens eine Komponente aufweist, die ausgewählt ist aus $Li_6PS_5Cl$, $Li_6PS_5Br$ und $Li_6PS_5I$, und

wobei der Festelektrolyt vom Argyrodit-Typ eine Dichte von etwa 1500 kg/m$^3$ (1,5 Gramm pro Kubikzentimeter (g/cm$^3$)) bis etwa 2000 kg/m$^3$ (2,0 g/cm$^3$) aufweist.

12. Festkörper-Sekundärbatterie (1) nach einem der Ansprüche 1 bis 11,

wobei die Anodenschicht (20) einen Anodenstromkollektor (21) aufweist,

wobei mindestens eine Komponente unter dem Kathodenstromkollektor (11) und dem Anodenstromkollektor (21) eine Basisfolie und eine Metallschicht auf mindestens einer Seite der Basisfolie aufweist, und

wobei die Basisfolie ein Polymer aufweist, wobei das Polymer Polyethylenterephthalat (PET), Polyethylen (PE), Polypropylen (PP), Polybutylenterephthalat (PBT), Polyimid (PI) oder eine Kombination davon aufweist, und

wobei die Metallschicht Indium (In), Kupfer (Cu), Magnesium (Mg), Edelstahl, Titan (Ti), Eisen (Fe), Kobalt (Co), Nickel (Ni), Zink (Zn), Aluminium (Al), Germanium (Ge), Lithium (Li) oder eine Legierung davon aufweist.

13. Verfahren zum Herstellen einer Festkörper-Sekundärbatterie (1) nach einem der Ansprüche 1 bis 12, wobei das Verfahren aufweist:

Mahlen einer Zusammensetzung, die M$_2$S, ein Alkalimetallsalz und eine zweidimensionale kohlenstoffhaltige Struktur aufweist;

Hinzufügen einer zweidimensionalen Kohlenstoff-Nanostruktur zur Zusammensetzung, um einen Verbundstoff zu erhalten, und Mahlen des Verbundstoffs;

Herstellen einer Kathode unter Verwendung einer Zusammensetzung, die den Verbundstoff enthält, der mit einem Bindemittel gemischt ist;

Herstellen einer Anode; und

Aufbringen eines Elektrolyten zwischen der Kathode und der Anode, um dadurch die Feststoff-Sekundärbatterie (1) nach Anspruch 1 herzustellen,

wobei vorzugsweise der Zusammensetzung beim Mahlen der Zusammensetzung ein kohlenstoffhaltiges Material zugesetzt wird.

**Revendications**

1. Une batterie secondaire solide (1) comprenant :

une couche de cathode (10) ;

une couche d'anode (20) ; et

une couche d'électrolyte solide (30) entre la couche de cathode (10) et la couche d'anode (20),

dans laquelle la couche de cathode (10) comprend un collecteur de courant de cathode (11) et une couche de matériau actif de cathode (12) sur au moins un côté du collecteur de courant de cathode (11),

dans laquelle la couche de matériau actif de cathode (12) comprend un matériau actif de cathode composite,

dans laquelle le matériau actif de cathode composite comprend un composite de $M_2S$, d'un sel d'alkali et d'une structure carbonée bidimensionnelle,

dans laquelle M est un métal alcalin, le métal alcalin étant Li ou Na, et la structure carbonée bidimensionnelle comprend du graphène, de l'oxyde de graphène, de l'oxyde de graphène réduit, ou une combinaison de ceux-ci, et

dans laquelle le composite comprend une solution solide de $M_2S$ et du sel d'alkali,

dans laquelle le sel d'alkali est un sel de lithium ou un sel de sodium, et le sel d'alkali est un composé binaire ou un composé ternaire,

dans laquelle le composé binaire comprend LiI, LiBr, LiCl, LiF, LiH, $Li_2O$, $Li_2Se$, $Li_2Te$, Li3N, $Li_3P$, $Li_3As$, $Li_3Sb$, $Li_3Al_2$, $LiB_3$, ou une combinaison de ceux-ci, ou comprend NaI, NaBr, NaCl, NaF, $Na_2O$, $Na_2Se$, $Na_3N$, $Na_3P$, $Na_3As$, $Na_3Sb$, $Na_3Al_2$, $NaB_3$, ou une combinaison de ceux-ci,

dans laquelle le composé ternaire comprend $Li_5OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, ou une combinaison de ceux-ci, ou comprend $Na_3OCl$, $NaBF_4$, $NaPF_6$, $NaAsF_6$, $NaClO_4$, $NaNO_3$, $NaAlO_2$, $NaAlCl_4$, $NaNO_3$, $Na_2CO_3$, $NaBH_4$, $Na_2SO_4$, $Na_3BO_3$, $Na_3PO_4$, $Na_4NCl$, $Na_5NCl_2$, $Na_3BN_2$, ou une combinaison de ceux-ci.

Et/ou dans laquelle

un rapport molaire de M2S au sel d'alkali dans le composite est d'environ 50:50 à environ 95:5, et

une quantité de la structure carbonée bidimensionnelle est d'environ 1 partie en poids à environ 30 parties en poids, par rapport à 100 parties en poids du composite.

2. La batterie secondaire solide (1) selon la revendication 1,

dans laquelle la structure carbonée bidimensionnelle est une structure carbonée bidimensionnelle dopée avec un dopant, et

dans laquelle le dopant est un dopant de type n ou un dopant de type p, et le dopant comprend de l'azote (N), du phosphore (P), du bore (B), du soufre (S), du fluor (F), du chlore (Cl), du brome (Br), du germanium (Ge), du gallium (Ga), ou une combinaison de ceux-ci ; et/ou

dans laquelle une quantité de la structure carbonée bidimensionnelle est d'environ 0,1 partie en poids à environ 20 parties en poids, par rapport à 100 parties en poids d'un poids total de la couche de matériau actif de cathode (12), et

dans laquelle la structure carbonée bidimensionnelle a une surface spécifique d'environ 1 mètre carré par gramme ($m^2$/g) à environ 50 $m^2$/g, un diamètre d'environ 1 micromètre ($\mu$m) à environ 50 $\mu$m, et une épaisseur d'environ 100 nanomètres (nm) à environ 10 $\mu$m, le diamètre étant mesuré à partir d'une image obtenue par microscope électronique à balayage, et la surface spécifique étant mesurée par adsorption BET.

3. La batterie secondaire solide (1) selon la revendication 1 ou 2, dans laquelle

une intensité dérivée d'un premier pic apparaissant à un angle de diffraction de $2\theta = 18° + 2,0°$ sur un spectre XRD du matériau actif de cathode composite est inférieure à une intensité dérivée d'un deuxième pic apparaissant à un angle de diffraction de $2\theta = 18° \pm 2,0°$ sur un spectre XRD de la structure carbonée bidimensionnelle utilisée pour préparer le composite,

dans laquelle le premier pic a une première largeur à mi-hauteur (FWHM1) et le deuxième pic a une deuxième largeur à mi-hauteur (FWHM2), et

dans laquelle FWHM1 est supérieure à FWHM2, et

FWHM1 est $\geq 1°$.

4. La batterie secondaire solide (1) selon l'une quelconque des revendications 1 à 3,

dans laquelle la couche de matériau actif de cathode (12) comprend en outre un électrolyte solide, et

dans laquelle l'électrolyte solide comprend un électrolyte solide à base de sulfure, un électrolyte solide à base d'oxyde, un électrolyte solide polymère, ou une combinaison de ceux-ci, et

dans laquelle une quantité de l'électrolyte solide est d'environ 10 parties en poids à environ 60 parties en poids, par rapport à 100 parties en poids de la couche de matériau actif de cathode (12).

5. La batterie secondaire solide (1) selon l'une quelconque des revendications 1 à 4, dans laquelle le composite comprend en outre un matériau carboné.

**6.** La batterie secondaire solide (1) selon l'une quelconque des revendications 1 à 5,

dans laquelle la couche d'anode (20) comprend un collecteur de courant d'anode (21) et une première couche de matériau actif d'anode (22) sur le collecteur de courant d'anode (21) ; et/ou
dans laquelle la couche d'anode (20) comprend un collecteur de courant d'anode (21) et une couche hôte de lithium (22) sur un côté du collecteur de courant d'anode (21),
dans laquelle la couche hôte de lithium (22) comprend une structure hôte du lithium, dans laquelle la structure hôte du lithium comprend au moins un hôte de lithium, l'au moins un hôte de lithium comprenant un hôte de lithium carboné, un hôte de lithium à base de métal, un hôte de lithium à base de polymère, ou une combinaison de ceux-ci, et
dans laquelle la batterie secondaire solide (1) comprend en outre un premier élément inactif (42) sur la couche d'anode (20).

**7.** La batterie secondaire solide (1) selon l'une quelconque des revendications 1 à 6,

dans laquelle un matériau actif d'anode de la première couche de matériau actif d'anode (22) comprend au moins un d'un matériau actif d'anode carboné et d'un matériau actif d'anode à base de métal,
dans laquelle
le matériau actif d'anode carboné comprend du carbone amorphe, du carbone cristallin, du carbone poreux, ou une combinaison de ceux-ci, et
dans laquelle le matériau actif d'anode à base de métal comprend de l'or (Au), du platine (Pt), du palladium (Pd), du silicium (Si), de l'argent (Ag), de l'aluminium (Al), du bismuth (Bi), de l'étain (Sn), du zinc (Zn), ou une combinaison de ceux-ci ;
et/ou
dans laquelle un matériau actif d'anode de la première couche de matériau actif d'anode (22) comprend un mélange d'un matériau actif d'anode à base de métal et d'un matériau carboné, un matériau actif d'anode à base de métal supporté sur un matériau carboné, ou une combinaison de ceux-ci.

**8.** La batterie secondaire solide (1) selon l'une quelconque des revendications 1 à 7, comprenant en outre une deuxième couche de matériau actif d'anode (24) entre le collecteur de courant d'anode (21) et la première couche de matériau actif d'anode (22),
dans laquelle

la deuxième couche de matériau actif d'anode (24) est une couche métallique comprenant du lithium ou un alliage de lithium, et
dans laquelle la deuxième couche de matériau actif d'anode (24) est une couche plaquée, et
dans laquelle une épaisseur de la première couche de matériau actif d'anode (22) est supérieure à une épaisseur de la deuxième couche de matériau actif d'anode (24).

**9.** La batterie secondaire solide (1) selon l'une quelconque des revendications 1 à 8, comprenant en outre un élément inactif sur au moins un côté de la couche de cathode (10) ou de la couche d'anode (20).

**10.** La batterie secondaire solide (1) selon l'une quelconque des revendications 1 à 9, dans laquelle la batterie secondaire solide (1) comprend :

environ 10 parties en poids à environ 80 parties en poids du $M_2S$,
environ 10 parties en poids à environ 40 parties en poids du sel d'alkali, et
environ 1 partie en poids à environ 20 parties en poids de la structure carbonée bidimensionnelle,
par rapport à 100 parties en poids du composite.

**11.** La batterie secondaire solide (1) selon l'une quelconque des revendications 1 à 10,

dans laquelle la couche d'électrolyte solide (30) comprend un électrolyte solide, un électrolyte gel, ou une combinaison de ceux-ci,
dans laquelle l'électrolyte solide comprend un électrolyte solide à base de sulfure, un électrolyte solide à base d'oxyde, un électrolyte solide polymère, ou une combinaison de ceux-ci,
dans laquelle l'électrolyte gel comprend un électrolyte gel polymère,
dans laquelle l'électrolyte solide à base de sulfure est au moins un sélectionné parmi :

$Li_2S-P_2S_5$ ;
$Li_2S-P_2S_5$-LiX, X étant un élément halogène ;
$Li_2S-P_2S_5-Li_2O$ ;
$Li_2S-P_2S_5-Li_2O$-LiI ;
$Li_2S-SiS_2$ ;
$Li_2S-SiS_2$-LiI ;
$Li_2S-SiS_2$-LiBr ;
$Li_2S-SiS_2$-LiCl ;
$Li_2S-SiS_2-B_2S_3$-LiI ;
$Li_2S-SiS_2-P_2S_5$-LiI ;
$Li_2S-B_2S_3$ ;
$Li_2S-P_2S_5-Z_mS_n$, chacun de m et n étant un nombre positif, Z étant Ge, Zn ou Ga ;
$Li_2S-GeS_2$ ;
$Li_2S-SiS_2-Li_3PO_4$ ;
$Li_2S-SiS_2-Li_pMO_q$, chacun de p et q étant un nombre positif, M étant P, Si, Ge, B, Al, Ga ou In ;
$Li_{7-x}PS_{6-x}Cl_x$, $0 < x < 2$ ; $Li_{7-x}PS_{6-x}Br_x$, $0 < x < 2$ ; et
$Li_{7-x}PS_{6-x}I_x$, $0 \leq x \leq 2$,

dans laquelle l'électrolyte solide à base de sulfure comprend un électrolyte de type argyrodite,
dans laquelle l'électrolyte solide de type argyrodite comprend au moins un sélectionné parmi $Li_6PS_5Cl$, $Li_6PS_5Br$ et $Li_6PS_5I$, et
dans laquelle l'électrolyte solide de type argyrodite a une densité d'environ 1500 kg/m$^3$ (1,5 grammes par centimètre cubique (g/cc) à environ 2000 kg/m$^3$ (2,0 g/cc).

12. La batterie secondaire solide (1) selon l'une quelconque des revendications 1 à 11, dans laquelle la couche d'anode (20) comprend un collecteur de courant d'anode (21), dans laquelle au moins l'un du collecteur de courant de cathode (11) ou du collecteur de courant d'anode (21) comprend un film de base et une couche métallique sur au moins un côté du film de base,

dans laquelle le film de base comprend un polymère, le polymère comprenant du polyéthylène téréphtalate (PET), du polyéthylène (PE), du polypropylène (PP), du polybutylène téréphtalate (PBT), du polyimide (PI), ou une combinaison de ceux-ci, et
dans laquelle la couche métallique comprend de l'indium (In), du cuivre (Cu), du magnésium (Mg), de l'acier inoxydable, du titane (Ti), du fer (Fe), du cobalt (Co), du nickel (Ni), du zinc (Zn), de l'aluminium (Al), du germanium (Ge), du lithium (Li) ou un alliage de ceux-ci.

13. Un procédé de préparation d'une batterie secondaire solide (1) selon l'une quelconque des revendications 1 à 12, le procédé comprenant :

le broyage d'une composition comprenant $M_2S$, un sel d'alkali et une structure carbonée bidimensionnelle ;
l'ajout à celle-ci d'une nanostructure carbonée bidimensionnelle pour obtenir un composite, et le broyage du composite ;
la préparation d'une cathode en utilisant une composition contenant le composite qui est mélangé avec un liant ;
la préparation d'une anode ; et
l'application d'un électrolyte entre la cathode et l'anode, pour produire ainsi la batterie secondaire solide (1) selon la revendication 1,
dans lequel de préférence un matériau carboné est ajouté à la composition lors du broyage de la composition.

# FIG. 1

# FIG. 2

# FIG. 3

1

11 10
12
30
22
24 20
21

# FIG. 4

1

11 10
12
40
30
22 20
21

# FIG. 5

# FIG. 6

**EP 4 510 217 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011165466 A1
- KR 102210401 B1
- US 11411246 B2
- US 2019067684 A1
- US 10090528 B2

**Non-patent literature cited in the description**

- *Nano Lett.*, 2014, vol. 14, 4821-4827
- *J. Mater. Chem. A*, 2015, vol. 3, 23095-23105
- *ACS Appl. Energy Mater.*, 2022, vol. 5, 11317-11327

48